# EUROPEAN PATENT SPECIFICATION

(11) **EP 4 109 200 B1**
(45) Date of publication and mention of the grant of the patent: **09.09.2026**
(21) Application number: 21180966.0
(22) Date of filing: 22.06.2021
(51) Int. Cl.: G05D 23/19

(54) **ACQUIRING A USER CONSUMPTION PATTERN OF DOMESTIC HOT WATER AND CONTROLLING DOMESTIC HOT WATER PRODUCTION BASED THEREON**
ERFASSUNG EINES BENUTZERVERBRAUCHSMUSTERS VON BRAUCHWARMWASSER UND STEUERUNG DER BRAUCHWARMWASSERBEREITUNG AUF GRUNDLAGE DAVON
ACQUISITION D'UN MODÈLE DE CONSOMMATION D'EAU CHAUDE DOMESTIQUE D'UN UTILISATEUR ET COMMANDE DE LA PRODUCTION D'EAU CHAUDE DOMESTIQUE SUR LA BASE DE CE MODÈLE

(43) Date of publication of application: 28.12.2022
(73) Proprietor: Daikin Europe N.V., 8400 Oostende (BE); DAIKIN INDUSTRIES, LTD., Osaka-Shi, Osaka 530-0001 (JP)
(72) Inventor: Zareh Eshghdoust, Mehran, 8400 Oostende (BE); Vandemergel, Kristof, 8400 Oostende (BE); Paolella, Matteo, 8400 Oostende (BE)
(74) Representative: Hoffmann Eitle

(56) References cited:
- US-A1- 2013 051 777
- US-A1- 2013 327 313
- US-A1- 2016 258 635
- ZHANHONG JIANG ET AL: "Deep Transfer Learning for Thermal Dynamics Modeling in Smart Buildings", ARXIV.ORG, CORNELL UNIVERSITY LIBRARY, 201 OLIN LIBRARY CORNELL UNIVERSITY ITHACA, NY 14853, 8 November 2019 (2019-11-08), XP081528695

## Description

### TECHNICAL FIELD

The present disclosure relates to a computer-implemented method of controlling domestic hot water production and/or distribution and a computer-implemented method of generating a domestic hot water consumption forecast. Moreover, the disclosure relates to a related controller for generating a domestic hot water consumption forecast, a controller for controlling domestic hot water production and/or distribution and a system for producing and/or distribution domestic hot water. In addition, the disclosure relates to a corresponding computer program and a computer-readable medium having stored thereon said computer program.

### BACKGROUND

In recent years buildings like homes or office spaces have been equipped with smart home networks to provide automated control of devices, appliances and systems, such as heating, ventilation, and air conditioning ("HVAC") system, lighting systems, alarm systems, home theatre and entertainment systems. Smart home networks may include control panels that a person may use to input settings, preferences, and scheduling information that the smart home network uses to provide automated control the various devices, appliances and systems in the building. For example, a person may input a desired temperature and a schedule indicating when the person is away from home. The home automation system uses this information to control the HVAC system to heat or cool the home to the desired temperature when the person is home, and to conserve energy by turning off power-consuming components of the HVAC system when the person is away from the home or for example sleeping.

Similar ideas exist in the field of domestic hot water production or distribution. The heating demand in domestic environments is made up of two main sources: sanitary hot water production and space heating. Sanitary hot water is typically produced either on-demand (requiring a relatively high-power device such as a gas boiler) or using a buffered approach with a hot water tank, which can be heated from a variety of sources, such as electric, solar, gas and heat pump. The demand for space heating of housing reduces in absolute values, thanks to the improved insulations (e.g. passive housing) and smaller houses. On the other hand, the demand for domestic hot water remains and even slightly increases. Hence, sanitary hot water production has a larger relative share in the total domestic heating demand.

In case of systems with a hot water storage tank, in order to provide the user with sufficient hot water, usually a fixed minimum temperature of the tank is set throughout the day, where the desired minimum temperature is chosen at the safe side. For energy saving reasons, newer systems use a fixed pattern through a weekly schedule. For example, the minimum temperature of the tank is lowered through the night or in the morning, when higher demand is expected, the temperature of the tank is increased.

In order to further improve energy efficiency of domestic hot water systems using a hot water storage tank, it is necessary to provide such systems for producing and/or distributing domestic hot water with means to more accurately predict the actual consumption of domestic hot water, thereby allowing the system to reduce the in the heat storage tank stored heat or hot water (hot water held in reserve) to a minimum, while maintaining user comfort. In order to provide the system with such a means for more accurately predicting the consumption of domestic hot water, it is also necessary to provide the system with means for more accurately estimating the available usable hot water content of the tank. This is generally done by detecting and measuring the use of domestic hot water. Known systems use for this purpose a monitoring system including a flow meter and a temperature sensor. Based on the outputs of these units the system estimates the energy which is thought to be taken out of the hot water storage tank and estimates the remaining usable hot water content of the tank.

US 2015/0226460 A1 for example describes a retrofit water boiler monitoring and forecast system, method and computer program product, for a water boiler system which includes a water boiler, a cold-water pipe, a hot-water pipe, including: an intake temperature sensor, configured to measure a water temperature in the cold-water intake pipe; a flow meter, configured to measure a flow rate of water running through the water boil system; an outlet temperature sensor, configured to measure a water temperature in the hot-water outlet pipe; a processing unit, adapted to receive sensor date from the intake temperature sensor, flow meter, and outlet temperature sensor, and configured to calculate an amount of available hot water in the water boiler based on the sensor data; and a display panel coupled to the processing unit configured to display at least one estimated real-time usage value, calculated by the processing unit based on the amount of available hot water.

Other related art may be found in US 2013/0327313 A1 describing a high-efficiency water heating system including at least one source of heat and a processor interfaced to the at least one heat source of heat, wherein the processor controls the operation of the at least one source of heat (e.g. energizes a heating element to provide heat to water), at least one source of data related to a consumption of hot water from the high-efficiency water heating system is provided and software running on the processor analysing the data and calculating a predicted demand for the hot water based upon the data, then controlling the operation of the at least one source of heat in response to the predicted demand, US 2016/025835 A1 describing a method and system for providing an interactive learning heating schedule for a water boiler system and US°2013/0051777 A1 being directed to a hot water heater including a tank for storing water, one or more heating elements for selectively applying heat to the water in the tank, and a controller for controlling the heating elements, operative to automatically self-program control of the hot water heater to reduce energy consumption of the hot water heater based on usage data.

ZHANHONG JIANG ET AL: "Deep Transfer Learning for Thermal Dynamics Modeling in Smart Buildings", ARXIV.ORG, CORNELL UNIVERSITY LIBRARY, 201 OLIN LIBRARY CORNELL UNIVERSITY ITHACA, NY 14853, 8 November 2019, relates to a deep supervised domain adaptation (DSDA) method for thermal dynamics modelling of building indoor temperature evolution and energy consumption. A long short term memory network based Sequence to Sequence scheme is pre-trained based on a large amount of data collected from a building and then adapted to another building which has a limited amount of data by applying the model fine-tuning.

### SUMMARY

In view of the above, it would be desirable to provide a computer-implemented method of acquiring a user consumption pattern of domestic hot water, a computer-implemented method of generating a domestic hot water consumption forecast, a computer-implemented method of controlling domestic hot water production and/or distribution, a controller for generating a domestic hot water consumption forecast, a controller for controlling domestic hot water production and/or distribution, a system for producing and/or distribution domestic hot water, a computer program and a computer-readable medium having stored thereon said computer program, allowing a more accurate generation or determination of a domestic hot water consumption forecast or prediction, thus, improving energy efficiency and reducing environmental footprint of domestic hot water production and/or distribution. A further object is to allow a smart control of the domestic hot water production and/or distribution by adapting the water heating process to individual usage conditions with the aim of reducing energy consumption while maintaining user comfort.

This may be achieved by a computer-implemented method of controlling domestic hot water production and/or distribution as defined in claim 1, a controller for generating a domestic hot water consumption forecast as defined in claim 16,

a controller for controlling domestic hot water production and/or distribution as defined in claim 17, a system for producing and/or distributing domestic hot water as defined in claim 18, a computer program as defined in claim 20 and a computer-readable medium as defined in claim 21.

Embodiments may be found in the dependent claims, the following description and the accompanying drawings.

The present disclosure provides a user-consumption-pattern-determination algorithm that is trained on a history or data collection representing amount of heat taped from a heat storage tank and/or histories or data collections representing amount of heat taped from a heat storage tank or normalized heat storage tanks.

In this way it becomes possible to more accurate determine a user-consumption-pattern, in particular of an individual user or individual household, by using a trained algorithm which can draw on data or empirical values collected from a large number of users over a long period of time.

According to one embodiment of the present disclosure, a computer-implemented method of acquiring a user consumption pattern of domestic hot water is provided. The computer-implemented method includes:
acquiring data representing an amount of heat, in particular an amount of equivalent energy, tapped from a heat storage tank, in particular a pressurized tank, within a preferably predetermined first time period,
generating a first history or data collection of data representing amount of heat, in particular cumulative heat, tapped from the heat storage tank over a preferably predetermined number of first time periods, and
acquiring a user consumption pattern of domestic hot water by applying a user-consumption-pattern-determination-algorithm to the generated first history or data collection of data representing amount of heat tapped from the heat storage tank,
wherein the user-consumption-pattern-determination-algorithm is an algorithm, in particular a time-series-forecast-algorithm, trained on history(ies) or data collection(s) representing amount of heat tapped from the heat storage tank or normalized heat storage tanks and defining user consumption patterns of domestic hot water using one or more machine-learning-algorithms, and the user-consumption-pattern-determination-algorithm is trained on:
   history data or data collection(s) representing amount of heat (ΣQ) tapped by a plurality of users or households over a second time period (T2), and
   hour of day, in particular of the respective first time period (T1), in particular within the respective history or data collection of data representing amount of heat (ΣQ) tapped.

In the context of the present disclosure, the term "acquiring" with regard to the acquisition or collection of data representing the amount of heat tapped from the heat storage tank is to be understood such that the respective data may be determined by using sensors such as temperature sensors or flow meters or by accessing or reading data representing the amount of heat tapped from the heat storage tank recorded in a memory. The memory may store periodic temperature and flow rate measurements of heat or domestic hot water stored in a heat storage tank for a certain time period.

In addition, in the context of the present disclosure, the term "representing" with regard to acquisition of data is to be understood such that the system and/or computer-implemented method may determine or reconstruct from the acquired data a specific amount of heat stored in the heat storage tank at a specific time and/or a specific time period.

Moreover, in the context of the present disclosure, the term "amount of heat" with regard to the tapping from the heat storage tank or with regard to the amount of heat stored in the heat storage tank (discussed later) is used to define the energy which is e.g. contained in the water tapped from the heat storage tank. In other words, the heat or energy drawn from the heat storage tank during a tapping (draw-off). Accordingly, with regard to the heat stored in the heat storage tank, the term "heat" refers for example to the remaining equivalent hot water (EHW) at t₀.

The term "equivalent hot water (EHW)" corresponds to the maximum hot water volume "V₄₀" as defined in EN16147. According to EN16147, the maximum amount of mixed water at 40°C in one single draw-off (from a specific heat storage tank) shall be determined by calculating the hot water energy during the draw-off. The hot water flow rate *fₘₐₓ* together with the temperatures of the incoming cold water ϑ*_{WC}* and the outgoing hot water ϑ*_{WH}* are measured during the draw-off at least each 10 s. The maximum hot water volume V40 is calculated using following formula: ${V}_{40} = \frac{1}{\left(40-10\right) \times 60} {\int }_{0}^{{t}_{40}} {f}_{max} \left(t\right) \times \left[{θ}_{WH}\left(t\right)-{θ}_{WC}\left(t\right)\right] dt$ where:
V₄₀ is the maximum volume of mixed water at 40°C in l;
*ϑ_{WH}*(t)*-* ϑ*_{WC}*(t) is the temperature difference between hot water temperature at outlet and cold water at inlet of domestic hot water storage in K;
t₄₀ is the time from starting the draw-off until ϑ*_{WH}*(t) is less than 40°C in s;
*fₘₐₓ*(t) is the flow rate of hot water during draw-off in I/min.

In addition, in the context of the present disclosure, the term "equivalent energy" (also called "useable energy") with regard to the tapping from the heat storage tank is to be understood as the amount of water at 40°C in litters which contains the water's thermal energy with respect to 10 degrees. Namely, for a volume V [litters] at temperature T[°C] we get: ${EV}_{40} \left(t\right) = \frac{{ρC}_{p} V \left(T-10\right)}{{ρC}_{p} \left(40-10\right)} = \frac{V \left(T-10\right)}{30} ,$

Furthermore, the term "user consumption pattern (UCP)" defines in the present disclosure parameters like temperature and/or amount of hot water tapped from the heat storage tank indicating the amount of heat tapped from the heat storage tank, in particular an cumulative amount of heat, at periodic intervals of time or within a certain time period. For example, does a user take shower every morning around 7 am, the user consumption pattern will show an increased demand on domestic hot water in a time period starting at 6am and ending at 8am.

Yet, in the context of the present disclosure, the term "predetermined" with respect to "time period" or "number of first time periods" is to be understood such as at a certain point in time, for example an initial point (initialization) when the computer-implemented method or the user-consumption-pattern-determination-algorithm is started or an update point (updating of the algorithm) when e.g. the user-consumption-pattern-determination-algorithm is updated, the respective "time period" or "number of first time periods" is manually or automatically determined, in case of automatically, the value is determined by the relevant algorithm, respectively.

Hence, at the time the computer-implemented method of acquiring a user consumption pattern or the user-consumption-pattern-determination-algorithm is started, the first time period may be set to one hour and the number of first time periods may be set to 12, thereby defining a prediction horizon of 12 hours. In other words, the first history or data collection of data representing amount of heat will span over 12 hours. In a next step, for example after 12 hours, or at a certain hour of the day, for example midnight or midday, the user-consumption-pattern-determination-algorithm may be updated based on the generated first history or data collection, thereby, the first time period for optimization reasons may be changed or set to 4 hours and the number of first time periods may be set to 6, thereby defining a new prediction horizon of 24 hours, wherein the first prediction horizon and the new prediction horizon may be combined to a cumulated prediction horizon of 36 hours.

In addition, in the context of the present disclosure, the term "normalized" with regard to the heat storage tanks is to be understood such that the respective heat storage tank or tanks in its/their characteristic(s) correspond(s) to the one heat storage tank for which the computer-implemented method of acquiring a user consumption pattern of domestic hot water is used or applied. In other words, the characteristic(s) of the heat storage tanks on which the algorithm was trained should not deviate so much from the characteristic of the actual heat storage tank that a negative effect on the acquisition or determination of the user consumption pattern of domestic hot water is to be expected. Accordingly, the used heat storage tank should be similar to the one on which the algorithm was trained. Alternatively, the algorithm may be trained for compensating such deviations (e.g. automatically scaling the size of the used heat storage tank to the one on which the algorithm was trained. On the other hand, the algorithm may also be trained on different sizes or types of heat storage tanks, so that the algorithm is able to adjust accordingly).

According to a further embodiment of the present disclosure, the computer-implemented method may further include:
generating a second history or data collection of data representing amount of heat tapped from the heat storage tank over a preferably predetermined number of first histories or data collections, wherein the first history or data collection preferably extends over a time period of one day or 24 hours and the second history or data collection preferably extends over a time period of one week or 7 days or 168 hours.

As noted above, the first time period in connection with the number of first time periods defines the prediction horizon, the same holds true for the second time period (number of first histories). Accordingly, the first and second history can also be seen as one history or data collection, spanning over (number of first periods x first time period) x number of first histories.

Additionally, in some embodiments of the present disclosure, the preferably predetermined first time period may extend or span over one week, two days, one day, 12 hours, 8 hours, 6 hours, 4 hours, 1 hour, 30 minutes, 10 minutes or 1 minute, and/or the preferably predetermined number of first time periods of the first history or data collection is 1, 2, 3, 4, 6, 24, 48, 144 or 1440.

Moreover, in some embodiments the preferably predetermined first time period may be determined based on the length/duration of the first history or amount of data of the data collection, in particular at an initial point and/or updating point. In other words, as described before, the prediction horizon may be changed, once more data representing amount of heat tapped from the heat storage tank over the prediction horizon are available.

According to a further embodiment of the present disclosure, when at the initial point (initiation of the computer-implemented method or user-consumption-pattern-determination-algorithm) no first history or data collection or only a short first history or view data of the data collection is/are available, a data filler is used to feed the user-consumption-pattern-determination-algorithm.

Moreover, in some embodiments, after a preferably predetermined fifth time period (second to third time period will follow later) the user-consumption-pattern-determination-algorithm may be newly initiated/started or updated or the initial point is newly set.

In a further embodiment of the present disclosure, the preferably predetermined second time period extends or spans over 30 days, 60 days, 90 days, 180 days, one year or two years.

Additionally, in some embodiments, the user-consumption-pattern-determination-algorithm may be further or alternatively be trained on:
day of week, in particular of the respective first time period and/or of the respective history or data collection of data representing amount of heat tapped, and/or
day of the year and/or week of the year and/or month of the year, in particular of the respective first time period and/or the respective history data or data collection, and/or
weather condition, in particular at the respective first time period and/or of the respective history or data collection of data representing amount of heat tapped, and/or
outside temperature, in particular at the respective first time period and/or of the respective history or data collection of data representing amount of heat tapped, and/or
vacation situation of the user or the household, in particular at the respective first time period and/or of the respective history or data collection of data representing amount of heat tapped, and/or
energy price, in particular at the respective first time period and/or of the respective history or data collection of data representing amount of heat tapped, and/or
green energy availability, in particular at the respective first time period and/or of the respective history or data collection of data representing amount of heat tapped, and/or
geographical location, in particular at the respective first time period and/or of the respective history or data collection of data representing amount of heat tapped, and/or
cultural factors, in particular at the respective first time period and/or of the respective history or data collection of data representing amount of heat tapped.

In the context of the present invention, the term "green energy availability" with regard to the teaching of the algorithm is to be understood such that for example on a sunny day, when a lot of preferably local photovoltaic electricity is available, in particular during the winter season, the trained or thrifty user may tend to take a bath. The same may apply for times when the price for electricity/energy is low.

On the other hand, the "geographical location" and/or "cultural factors" may as well influence users' domestic hot water consumption habits. For example, users living in areas close to the equator may shower more frequently than users in cooler areas. Moreover, because of "cultural factors" like religion or wealth, users also may tend to take a bath more frequently. The same may apply to the amount of hot water used for one shower or one bath.

According to a further embodiment of the present disclosure, the user-consumption-pattern-determination-algorithm may also or additionally consider meta data when determining the user consumption pattern (UCP), where the meta data are preferably selected from the group comprising: number of residents (living in the respective household), age(s) of the resident(s), average age of residents, gender of the resident(s), geographical location, cultural factors, which may be automatically determined based on the geographical location, annual hot water consumption.

Moreover, in some embodiments, the user-consumption-pattern-determination-algorithm may further comprise:
assigning the user or household to a predetermined cluster or group based on at least one of the meta data,
determining a user-consumption-pattern-determination-sub-algorithm based on the assigned cluster or group,
wherein the user-consumption-pattern-determination-sub-algorithm was preferably trained on the data of a plurality of users or households having the same at least one of the meta data.

In a further embodiment of the present disclosure, after a user-consumption-pattern-determination-sub-algorithm may be determined, an individual-user-consumption-pattern-determination-algorithm is developed by training the pre-set user-consumption-pattern-determination-sub-algorithm based on acquired first history data or data collection(s) and/or second history data or data collection(s) representing amount of heat tapped from the heat storage tank by the preferably individual user or the preferably individual household over a preferably predetermined third time period, wherein the preferably predetermined third timer period preferably extends over 1 day, 2 days, 10 days, 30 days, 60 days, 90 days, 180 days, one year or continuously.

According to a further embodiment of the present disclosure, the user-consumption-pattern-determination-algorithm may be trained to determine habits of individual users including: taking shower in the morning, taking shower in the evening, taking bath in the evening, using an average amount of heat, in particular an amount of equivalent energy, for taking a shower or a bath.

Additionally, the present disclosure is directed to a computer-implemented method of generating a domestic hot water consumption forecast, the method including:
acquiring a user consumption pattern (UCP) of domestic hot water by using the above described computer-implemented method of acquiring a user consumption pattern of domestic hot water, and
generating the domestic hot water consumption forecast by applying a domestic-hot-water-consumption-forecast-algorithm to the acquired user consumption pattern (UCP).

Moreover, in some embodiments of the present disclosure, the domestic-hot-water-consumption-forecast-algorithm may consider detected deviations when generating the domestic hot water consumption forecast, wherein the deviations preferably comprise: vacation situation of the user or the household, weather condition, unexpected events like earlier shower than average, guest(s), party, etc.

According to a further embodiment of the present disclosure, in the event of a detection of a deviation, the domestic hot water consumption forecast is automatically adjusted and/or the user is required to confirm the detected deviation, preferably via a control terminal, preferably a remote control terminal or a voice recognition system, and depending on the confirmation and/or input of the user the domestic hot water consumption forecast may be adjusted.

Furthermore, in some embodiments, the domestic hot water consumption forecast may be determined for a fourth preferably predetermined time period (control horizon) of 10 minutes, 30 minutes, 1 hour, 2 hours, 4 hours, 6 hours or 12 hours.

Moreover, the disclosure provides a computer-implemented method of controlling domestic hot water production and/or distribution, particularly by controlling a system for producing and/or distributing domestic hot water, the method comprising:
generating a domestic hot water consumption forecast by using the above described computer-implemented method of generating a domestic hot water consumption forecast, and
controlling domestic hot water production and/or distribution based on the generated domestic hot water consumption forecast.

In the present disclosure, the term "controlling" concerning the "controlling domestic hot water production and/or distribution" defines that for example based on detected temperatures or detected flow rates and/or based on estimated values or patterns, like a temperature distribution pattern or a user consumption pattern or a user consumption forecast the production of domestic hot water is changed, for example increased or decreased by starting or stopping heating of the stored hot water by the loading coil.

Furthermore, the term "production" concerning the "controlling of domestic hot water production and/or distribution" defines in the present disclosure the production of hot water, meaning the increase of the temperature above approximately 40°C. In more detail, in order to produce a certain amount of heat or domestic hot water, the loading coil is provided with a hot fluid, which is for example heated and provided by a heat pump. By heat transfer between the fluid flowing through the loading coil and hot water stored in the hot water storage tank, the hot water stored in the tank is heated, meaning the temperature of the hot water is increased.

Yet, in the present disclosure the term "distribution" defines the distribution or making available (providing) of heat or hot water, particularly water with a temperature above 40°C, to respective users, like a shower or a bathroom.

In addition, in a further embodiment of the present disclosure, the amount of heat, in particular amount of equivalent energy, to be stored in the heat storage tank may be determined based on the generated domestic hot water consumption forecast.

According to another embodiment of the present disclosure, the amount of heat, in particular amount of equivalent energy, to be stored in the heat storage tank may be determined based on the generated domestic hot water consumption forecast.

Moreover, in some embodiments, the amount of heat, in particular amount of equivalent hot energy, to be stored in the heat storage tank, may be determined by applying a heat-control-algorithm to the generated domestic hot water consumption forecast, wherein the heat-control-algorithm is preferably a trained algorithm.

Furthermore, in some embodiments of the present disclosure, the heat-control-algorithm may be trained on: electric energy price (e.g. night and day difference, high availability of green energy like photovoltaic or wind electricity), local or green energy availability, weather condition, weather forecast, etc.

According to some embodiments of the present disclosure, dependent on electric energy price, local or green energy availability, weather condition and/or weather forecast, the heat-control-algorithm may initiate or start production of heat or increase the amount of heat stored in the heat storage tank, even though the generated domestic hot water consumption forecast does not require an increase of stored heat.

In addition, the present disclosure provides a controller for generating a domestic hot water consumption forecast having a control unit and means adapted to execute the steps of the above described computer-implemented method of generating a domestic hot water consumption forecast.

Furthermore, the present disclosure is directed to a controller for controlling domestic hot water production and/or distribution, particularly by controlling a system for producing and/or distributing domestic hot water, having a control unit and means adapted to execute the steps of the above described computer-implemented method of controlling domestic hot water production and/or distribution.

The present disclosure further provides a system for producing and/or distributing domestic hot water, including: a controller, in particular the above described controller for generating a domestic hot water consumption forecast, and means adapted to execute the steps of the above described method of controlling domestic hot water production and/or distribution.

In some embodiments of the present disclosure, the system for producing and/or distributing domestic hot water may further include:
a heat storage tank, particularly a hot water storage tank, more particularly a pressurized tank, and
means adapted to determine an amount of heat, in particular an amount of equivalent energy, stored in the heat storage tank and/or to determine an amount of heat, in particular an amount of equivalent energy, tapped from the heat storage tank.

Since the controller and the system are adapted to execute the above described steps of the computer-implemented methods, the further features disclosed in connection with the computer-implemented methods may also be applied to the controller and the system. The same applies vice versa for the computer-implemented methods.

The disclosure further provides a computer program comprising instructions to cause the above described system for producing and/or distributing domestic hot water and/or the above described controller for controlling domestic hot water production to execute the steps of the above described computer-implemented method of controlling domestic hot water production and/or distribution and/or the above described controller for generating a domestic hot water consumption forecast to execute the steps of the above described computer-implemented method of acquiring a user consumption pattern of domestic hot water.

Moreover, the present disclosure provides a computer-readable medium having stored thereon the above described computer program.

In this regard, the above described computer-implemented method cannot only be performed by the controller and the system which are adapted to execute the described steps of the computer-implemented method, the method can also be performed by cloud-computation. Meaning, the acquired data representing an amount of heat tapped from a specific heat storage tank, in particular the data of the real temperature sensors of the heat storage tank, are sent to the cloud, the cloud is adapted to execute the above described steps of the computer-implemented method of acquiring a user consumption pattern and sends back the acquired user consumption pattern of domestic hot water to the controller for generating a domestic hot water consumption forecast by executing the above described steps of the method of generating a domestic hot water consumption forecast.

Moreover, since the computer program and the computer-readable medium are also related to the above described controller and system for generating a domestic hot water consumption forecast and/or for controlling domestic hot water production and/or distribution, the further features disclosed in connection with the computer-implemented methods, the controller and the system may also be applied to the computer program and the computer-readable medium and vice versa.

According to a first aspect of present disclosure, a computer-implemented method of monitoring and/or controlling domestic hot water production and/or distribution, particularly by controlling a system for domestic hot water production and/or distribution, the method comprising:
- detecting or acquiring at least two real or actual temperatures of a fluid, particularly sanitary hot water, that is stored in a heat storage tank, in particular a pressurized tank, at at least two different positions along the height of the heat storage tank, which is preferably a direction parallel to the direction of gravity, at least at few points in time, preferably at several points in time, and
- acquiring at least one temperature distribution pattern of heat of the fluid stored in the heat storage tank and/or corresponding heat distribution pattern data by applying a temperature-distribution-pattern-algorithm to the detected or acquired at least two temperatures detected or acquired at least at few points in time, preferably at several points in time.

In this way it becomes possible to more accurate estimation and monitoring of the available and/or usable hot water content of a hot water storage tank while improving the energy efficiency of domestic hot water production and/or distribution. Moreover, since it becomes possible to accurately estimate the heat and/or equivalent hot water stored in a hot water storage tank by only using temperature sensors, the need of a flow detector for detecting the amount of hot water tapped from the hot water storage tank becomes obsolete. In the present invention, the term "monitoring" concerning the "monitoring of domestic hot water production and/or distribution" is used to define that the production of for example domestic hot water is detected and optionally recorded using virtual and real temperature sensors. For example, when hot water is tapped from the hot water storage tank, a change or alteration in the temperature distribution pattern in the hot water storage tank is detected and/or determined and based thereon is an amount of heat (kWh) remaining in the hot water storage tank and/or tapped from the hot water tank determined and/or recorded.

Moreover, the term "controlling" concerning the "controlling domestic hot water production and/or distribution" defines in the present invention that for example based on detected temperatures or detected flow rates and/or based on estimated values or patterns, like the temperature distribution pattern, the production of domestic hot water is changed, for example increased or decreased by starting or stopping heating of the stored hot water by the loading coil.

Furthermore, the term "production" concerning the "monitoring and/or controlling domestic hot water production" defines in the present invention the production of hot water, meaning the increase of the temperature above 40°C. In more detail, in order to produce a certain amount of domestic hot water, the loading coil is provided with a hot fluid, which is for example heated and provided by a heat pump. By heat transfer between the fluid flowing through the loading coil and hot water stored in the hot water storage tank, the hot water stored in the tank is heated, meaning the temperature of the hot water is increased.

Yet, in the present invention the term "distribution" concerning the "monitoring and/or controlling domestic hot water distribution" defines the distribution or making available (providing) of hot water, particularly water with a temperature above 40°C, to respective users, like a shower or a bathroom.

The computer-implemented method may further comprise:
- acquiring or simulating a plurality of virtual temperatures, preferably at least 5 virtual temperatures, particularly more than 10 virtual temperatures, more particularly more than 20 virtual temperatures, of the fluid stored in the heat storage tank at different positions along the height of the heat storage tank by applying a virtual-temperature-sensor-algorithm to the detected at least two real or actual temperatures detected at least at few points in time, preferably at several points in time, and
- acquiring or simulating the temperature distribution pattern of heat stored in the heat storage tank and/or corresponding heat distribution pattern data by applying the temperature-distribution-pattern-algorithm to the detected at least two real or actual temperatures and the acquired or simulated plurality of virtual temperatures,
where preferably the virtual temperatures are acquired or simulated by using a neural network.

The computer-implemented method may further comprise:
- determining an amount of heat, in particular an amount of equivalent hot water (EHW, V40), stored in the heat storage tank by applying a heat-estimation-algorithm to the acquired temperature distribution pattern and/or the detected at least two real or actual temperatures and the acquired plurality of virtual temperatures, and/or
- acquiring at least two temperature distribution patterns and/or corresponding heat pattern data by applying the temperature-distribution-pattern-algorithm to at least two sets of acquired temperatures, preferably a plurality of sets of detected and/or acquired temperatures, preferably comprising the detected real temperatures and/or the acquired virtual temperatures, which are detected at least at two different points in time, and
- determining an amount of heat, in particular an amount of equivalent hot water, tapped from the heat storage tank by applying a tapping-estimation-algorithm to the at least two temperature distribution patterns (indirect tapping estimation) .

According to a further aspect, the temperature distribution pattern acquiring step, in particular the temperature-distribution-pattern-algorithm, of the computer-implemented method comprises:
determining the temperature distribution pattern of the heat stored in the heat storage tank by processing the detected at least two real or actual temperatures, detected at least at few points in time, preferably at several points in time, more particularly the detected at least two real or actual temperatures and the acquired or simulated plurality of virtual temperatures, using a regression-algorithm, wherein the regression-algorithm is preferably trained on temperature data defining temperature distribution patterns of the heat stored in the heat storage tank using one or more machine-learning-algorithms.

Moreover, the regression-algorithm of the computer-implemented method may be trained on:
Temperatures and/or temperature data detected by a plurality of temperature sensors, preferably including the two temperature sensors used for detecting the at least two temperatures, provided at different positions along the height of the heat storage tank, and/or
heat coil input and/or output temperature(s), particularly during heating / heat up of the fluid stored in the heat storage, and/or
flow rate(s) at an inlet and/or an outlet of the fluid into/from the heat storage tank, and/or
flow rate of the fluid (heating fluid) flowing through the heat coil.

Further, the computer-implemented method may comprise: acquiring a flow rate and/or amount of fluid, in particular amount of hot water, tapped from the heat storage tank by using at least one flow rate sensor, preferably arranged at an outlet of the fluid from the heat storage tank, and/or determining an amount of heat, in particular an amount of equivalent hot water (EHW, V40), tapped from the heat storage tank by applying an indirect-tapping-estimation-algorithm to the at least two temperature distribution patterns and a flow rate of the fluid flowing through the heat coil (indirect tapping estimation).

Moreover, in the computer-implemented method at least one temperature distribution pattern may be acquired and/or determined by using:
the at least two temperature sensors, in particular real temperature sensors, and
a plurality of virtual temperature sensors, preferably at least 5 virtual temperature sensors, particularly more than 10 virtual temperature sensors, more particularly more than 20 virtual temperature sensors, which are used for acquiring the plurality of virtual temperatures, preferably the at least 5 virtual temperatures.
wherein the virtual temperature sensors are preferably provided and/or simulated by an (artificial) neural network.

In the present invention, the term "real" in "real temperature" and "real temperature sensors" is used for defining temperature sensors that are (actually) physically provided in the system for monitoring and/or controlling domestic hot water production and hence actually measure real (live) temperatures. In other words, the real temperature sensors are in fact physically provided at the heat storage tank and actually measure a temperature of the fluid stored in the heat storage tank.

On the other hand, the term "virtual" in "virtual temperatures" and "virtual temperature sensors" is used in the present invention to define that the sensors are not physically provided in the system for monitoring and/or controlling domestic hot water production. Instead, the virtual temperature sensors are somewhat simulated by the neural network as explained below in more detail. The temperature values of the virtual sensors are determined by the trained neural network based on the inputs of the real temperature sensors, hence, the acquired or simulated temperatures are called "virtual temperatures".

Furthermore, the computer-implemented method may comprise: acquiring a user consumption pattern by applying a user-consumption-algorithm to:
a) the acquired temperature distribution pattern(s) of the heat stored in the heat storage tank, and/or
b) the determined amount of heat or amount of equivalent hot water, stored in the heat storage tank, and/or
c) the determined amount of heat or equivalent hot water tapped from the heat storage tank by using the indirect-tapping-estimation-algorithm, and/or
d) the determined amount of fluid or hot water tapped from the heat storage tank by using the at least one flow rate sensor.

Moreover, the computer-implemented method may further comprise: determining a heating pattern and/or hot water production control pattern of the fluid stored in the heat storage tank by applying a heating-pattern-algorithm to the acquired user consumption pattern, wherein the user consumption pattern and/or the heating pattern and/or hot water production control pattern is/are divided into time increments of one day, 12 hours, 6 hours, 1 hour, 30 minutes, 10 minutes, and/or 1 minute.

This means, the user consumption pattern is for example a collection of the acquired temperature distribution pattern(s) of the heat stored in the heat storage tank and/or the determined amount of heat or amount of equivalent hot water, stored in the heat storage tank, at a plurality of timepoints, for example 10 times per hour, and based on the ten data sets an average value is calculated which defines and/or characterizes one increment, in this case an increment of one hour. Based on the acquired increments, a user consumption pattern can be determined. Same applies for the heating pattern and/or hot water production control pattern.

For example, does a user consumption pattern show that a specific user always has a high domestic hot water demand at a specific time, for example in the morning from 6am to 8am (taking shower), the heating pattern can be adapted accordingly, meaning that at the time from 6am to 8am an unusual high amount of hot water is made available. Furthermore, in the computer-implemented method at least ten, preferably at least twenty, more preferably at least thirty temperatures may be acquired at least at ten points in time, preferably at least at twenty points at time, more preferably at least at thirty points in time, before a temperature distribution pattern of the heat storage tank is determined.

In this way, an accuracy in determining the temperature distribution pattern can be improved. In detail, before a temperature distribution pattern is determined, a plurality of temperature sets of the at least two temperatures is acquired at several points in time and based on the plurality of temperature sets (history) a temperature distribution pattern is determined using an (artificial) neural network.

Moreover, the invention provides a computer-implemented method of monitoring and/or controlling domestic hot water production and/or distribution, particularly by monitoring and/or controlling a system for monitoring and/or controlling domestic hot water production and/or distribution, the method comprising:
detecting at least two real temperatures of a fluid, particularly sanitary hot water, that is stored in a heat storage tank, in particular a pressurized tank, at at least two different positions along the height of the heat storage tank at least at few points in time,
acquiring an amount of fluid tapped from the heat storage tank by applying a fluid-tapping-estimation-algorithm to the at least two real temperatures detected at least at few points in time, and
acquiring an amount of heat or an amount of equivalent hot water tapped from the heat storage tank by applying a direct-tapping-estimation-algorithm to the acquired amount of fluid tapped from the heat storage tank and a topmost layer temperature of the heat storage tank.

Furthermore, in the computer-implemented method the topmost layer temperature may be detected by a temperature sensor, particularly a real temperature sensor, that is provided near an outlet of the heat storage tank, and/or acquired by the topmost real or virtual temperature sensor of the above described computer-implemented method.

The invention further provides a controller for monitoring and/or controlling a domestic hot water production and/or distribution system having a control unit and means adapted to execute the above described steps of the computer-implemented method.

The invention further provides a system for monitoring and/or controlling domestic hot water production and/or distribution having a controller, in particular the above described controller, and means adapted to execute the above described steps of the computer-implemented method.

The system may further comprise:
a heat storage tank, particularly a hot water storage tank, more particularly a pressurized hot water storage tank, and
at least two temperature sensors that are provided at two different positions along the height of the hot water storage tank and configured to detect the temperature of a fluid, particularly sanitary hot water, that is stored in the hot water storage tank.

Moreover, in the system the number of the at least two temperature sensors is at most 5, preferably at most 4, more preferably at most 3, and one of the at least two temperature sensors is preferably located in a bottom half of the heat storage tank, more preferably in a bottom third of the heat storage tank.

Since the controller and the system are adapted to execute the above described steps of the computer-implemented methods, the further features disclosed in connection with the computer-implemented methods may also be applied to the controller and the system. The same applies vice versa for the computer-implemented methods.

The invention further provides a computer program comprising instructions to cause the above described controller for a domestic hot water production and/or distribution system and/or the above described system for domestic hot water production and/or distribution to execute the above described steps of the computer-implemented method of monitoring and/or controlling domestic hot water production and/or distribution.

Moreover, the invention provides a computer-readable medium having stored thereon the above described computer program for monitoring and/or controlling domestic hot water production and/or distribution.

In this regard, the above described computer-implemented method cannot only be performed by the controller and the system which are adapted to execute the described steps of the computer-implemented method, the method can also be performed by cloud-computation. Meaning, the data of the real temperature sensors of a specific heat storage tank are sent to the cloud, the cloud is adapted to execute the above described steps of the computer-implemented method and sends back the acquired data like temperature distribution pattern, equivalent hot water stored in the heat storage tank, heat and/or equivalent hot water tapped from the heat storage tank, consumer pattern etc. to a controller and/or user of the respective system for monitoring and/or controlling domestic hot water.

Since the computer program and the computer-readable medium are also related to the above described controller and system for domestic hot water production and/or distribution, the further features disclosed in connection with the computer-implemented methods, the controller and the system may also be applied to the computer program and the computer-readable medium and vice versa.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, in which:
Fig. 1 is a schematic illustration showing a conventional forecast system for a water boiler system;
Fig. 2 is a schematic illustration of a system for monitoring and/or controlling domestic hot water production and/or distribution shown in a deployed stage according to a first embodiment of the present disclosure;
Fig. 3 is a schematic illustration of a system for monitoring and/or controlling domestic hot water production and/or distribution shown in a training stage according to a second embodiment of the present disclosure;
Fig. 4 is a block diagram illustrating an example signal processing hardware configuration of the system of Fig. 2, according to a further embodiment of the present disclosure;
Fig. 5 is a flow diagram illustrating a process of generating a domestic hot water consumption forecast according to one embodiment of the present disclosure;
Fig. 6 is a schematic illustration of a system for controlling domestic hot water production and/or distribution according to a further embodiment if the present disclosure;
Fig. 7 is a schematic illustration shown thee different models for generating a domestic hot water consumption forecast and using said for smart control of domestic hot water production and/or distribution;
Fig. 8 is a flow diagram illustrating a process by which the system of Fig. 2 acquires a temperature distribution pattern TDP₁ of heat stored in the heat storage tank and determines an amount of heat or an amount of equivalent hot water stored, in accordance with an embodiment of the present disclosure;
Fig. 9 is a flow diagram illustrating an offline data collecting process for a training process of the system in the training stage shown in Fig. 3;
Fig. 10 is a block diagram illustrating a process by which the system of Fig. 2 determines an amount of heat (EHW, V40) stored in the heat storage tank, in accordance with an embodiment of the present disclosure;
Fig. 11 is a block diagram illustrating a process by which the system of Fig. 2 determines an amount of heat tapped from the heat storage tank, in accordance with a further embodiment of the present disclosure;
Fig. 12 is a flow diagram illustrating a training process of the temperature distribution estimator of Figures 10 and 11 in accordance with an embodiment of the present disclosure;
Fig. 13 is a flow diagram illustrating a training process of the direct tapping estimator of Fig. 10 in accordance with a further embodiment of the present disclosure;
Fig. 14 is a schematic illustration of a neural network comprising artificial neurons in an input layer, a hidden layer, and an output layer;
Fig. 15 is a schematic illustration of a neural network of a user-consumption-pattern-determination-algorithm in accordance with an embodiment of the present disclosure; and
Fig. 16 is a diagram illustrating a user consumption pattern acquired by the system for monitoring and/or controlling domestic hot water production and/or distribution shown in Fig. 2.
Fig. 17 is a schematic illustration showing a heat storage tank in a configuration without a coil.

### DETAILED DESCRIPTION

Several embodiments of the present disclosure will now be explained with reference to the drawings. It will be apparent to those skilled in the field of domestic hot water production and/or distribution from this disclosure that the following description of the embodiments is provided for illustration only and not for the purpose of limiting the disclosure as defined by the appended claims.

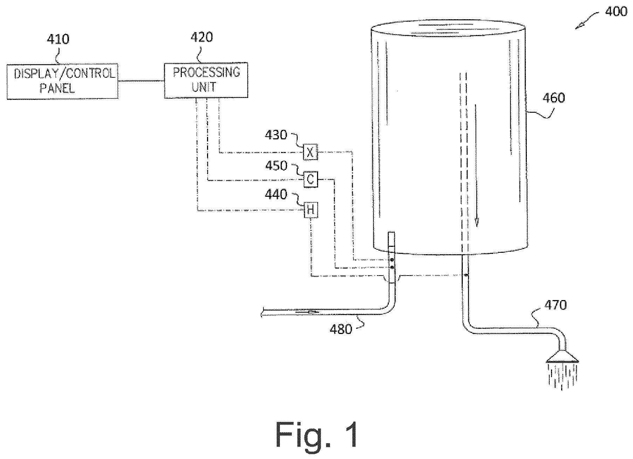

Figure 1 is a schematic illustration showing a conventional forecast system for a water boiler system. In Figure 1 a water heater (boiler) system 400 is augmented with an immediate monitoring and forecast system. A typical water boiler system includes a water boiler 460, a cold-water intake pipe 480 which brings in cold water from an external source, and a hot water outlet pipe 470 from the boiler (usually located near the top of the boiler where the hottest water is found) to a household system of pipes for dispersion throughout the house (e.g. to the bathroom, kitchen, laundry room etc.). The system collects data form three sensors assembled on the boiler: a first temperature sensor (C) 450 measures the temperature of the water in the intake line 480; a second temperature sensor (H) 440 measures the temperature of the water in hot-water outlet pipe leading out of the boiler; and a flow meter (X) 430 which measures the flow rate of water moving through the cold-water intake line, into the boiler. The flow rate sensor can be placed on either the intake or outlet lines as the boiler system is a closed system. The system analysed input from the sensors, calculates the amount of available hot water and displays a real-time estimation of water availability on a display unit 410 which is preferably located in a bathing area such as a shower or bathroom.

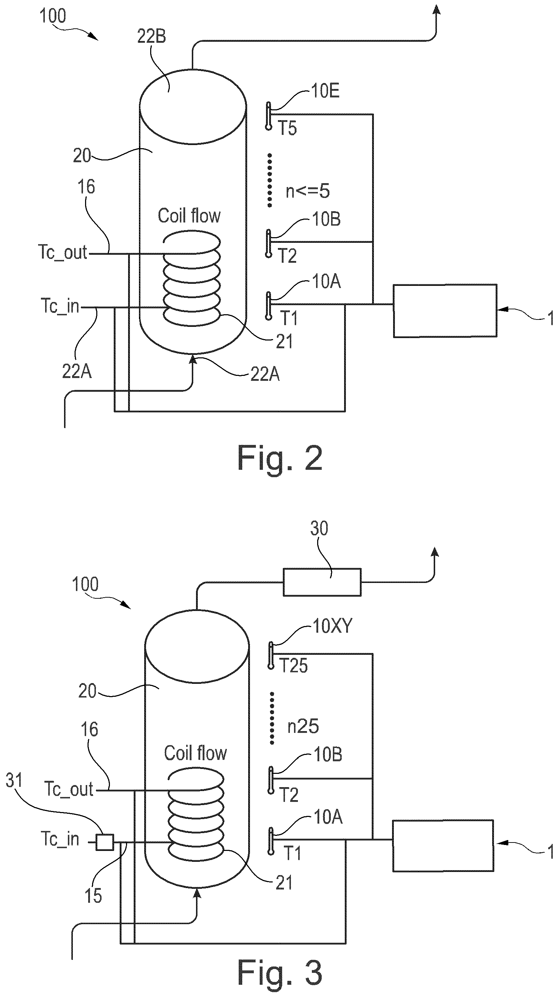

Figure 2 is a schematic illustration of a system for monitoring and/or controlling domestic hot water production and/or distribution shown in a deployed stage according to a first embodiment of the present disclosure. The shown system comprises a controller 1 for monitoring and controlling domestic hot water production and distribution, a heat storage tank 20 for storing heated water, particularly water that is heated above 40°C, and five temperature sensors 10A to 10B for detecting the temperature of the hot water stored in the heat storage tank 20.

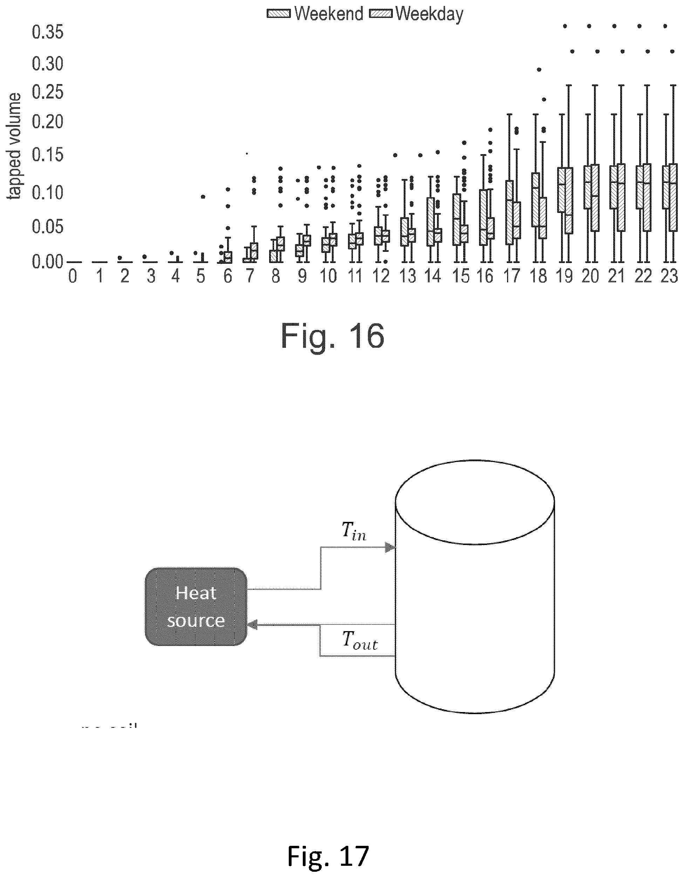

Moreover, as shown Figure 2, the heat storage tank 20 which is preferably a pressurized tank comprises a coil or loading coil that is located in the bottom half of the tank. Alternatively, the tank may have a configuration without a coil where the heat exchanger/heat source can be placed outside the tank or can be a part of the tank. In this case, the hot water is injected and circulated as shown in Fig 17.

Since the temperature distribution of the hot water stored in the heat storage tank 20 or hot water storage tank is layered (layer stratification), which means that even if the water near the bottom is cold (below 40°C), hot water can still be tapped from the tank. In case the heat source for heating the hot water stored in the heat storage tank 20 is for example a heat pump, the heat pump can operate in the initial phase of the tank heat up in a better COP, since the provided hot water only needs to have a temperature slightly (ΔT about 3°C) higher than the temperature of the water at the bottom half of the tank.

Moreover, since the hot water stored in the heat storage tank 20 is layered, the temperature increases continuously from the bottom of the tank to the top of the tank, leading to a characteristic temperature distribution pattern. As the temperature is increasing from the bottom of the tank to the top of the tank, the temperature sensors 10A to 10E, provided at different positions along the height of the hot water storage tank 20, measure different temperatures dependent on the location / height of the respective sensor.

The shown hot water storage tank 20 is provided with a cold-water intake / inlet 22A which lets in cold water from an external source and a hot water outlet / outlet 22B for tapping hot water from the hot water storage tank 20. The inlet 22A is provided in a bottom third of the tank and the outlet 22B is located near the top of the tank where the hottest water is found. From the outlet 22B the hot water can for example be distributed to a household by pipes for dispersion throughout the house.

Moreover, the shown system 100 comprises further a pair of temperature sensors 15, 16 for detecting the inlet temperature and outlet temperature of the fluid (heating fluid) flown through the loading coil.

The system uses the controller 1 to acquire by using the (real) temperature sensors 10A to 10E five (real) temperatures T_{1R_t0} to T_{5R_t0} of the layered hot water stored in the hot water storage tank 20. Based on the acquired five real temperatures T_{1R_t0} to T_{5R_t0} the system further acquired a temperature distribution patter TDP₁ of heat stored in the hot water storage tank 20 and corresponding heat distribution pattern data. In order to determine the temperature distribution patter TDP₁ and the corresponding heat distribution pattern data, the controller 1 applies a temperature-distribution-pattern-algorithm that will be explained in more detail below. Based on the acquired heat-distribution-pattern-algorithm the controller 1 then determines an amount of heat, in particular an amount of equivalent hot water, stored in the hot water storage tank 20, this is also done by applying a heat-estimation-algorithm to the acquired temperature distribution pattern (TDP₁).

When the above described process is repeated over the time, particularly after a certain amount of hot water has been tapped from the tank 20 or the temperature of the hot water stored in the tank 20 has dropped because of heat loss to the surrounding environment, the system can acquire several temperature distribution patterns TDP₁, TDP₂ to TDPₙ. Based on the acquired temperature distribution patterns TDP₁, TDP₂ to TDPₙ the controller can determine a remaining amount of heat in the hot water storage tank 20 and an amount of heat, in particular an amount of equivalent hot water, tapped from the heat storage tank by applying an indirect-tapping-estimation-algorithm to the acquired temperature distribution patterns TDP₁, TDP₂ to TDPₙ.

Figure 3 is a schematic illustration of a system for monitoring and/or controlling domestic hot water production and/or distribution shown, particularly the one of Figure 2, in a training stage according to a second embodiment of the present disclosure. The shown system comprises all components explained above with regard to the system shown in Figure 2. Furthermore, the system is provided for training purposes with additional 20 (real) temperature sensors, which are also provided along the height of the hot water storage tank 20 on different positions, a flow rate sensor 30 for measuring a flow rate of the hot water tapped from the hot water storage tank 20 and a flow rate sensor 31 for measuring a flow rate of the fluid (heating fluid) flowing through the coil.

As explained above, this system 100 is used for training the system to acquire or determine or simulate the temperature distribution pattern of the heat or hot water stored in the heat storage tank or hot water storage tank 20. The training of the system, particularly of the temperature-distribution-pattern algorithm, heat-estimation-algorithm, indirect-tapping-estimation-algorithm and the regression-algorithm is explained in more detail below.

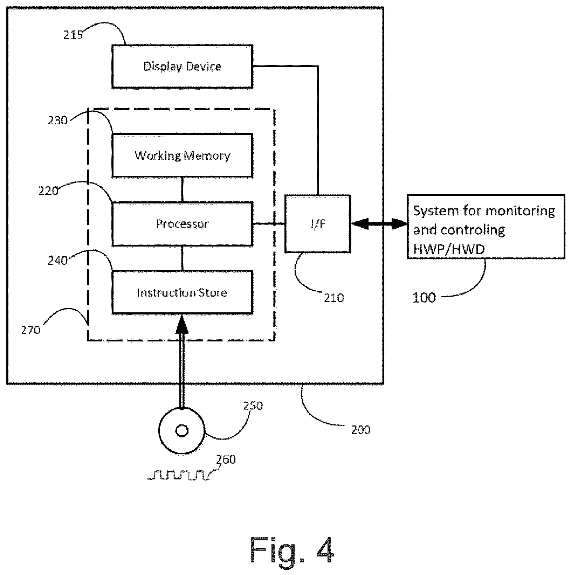

Figure 4 is a block diagram illustrating an example signal processing hardware configuration of the system of Figure 2, according to a further embodiment of the present disclosure, which may be configured to function as the controller 1 of Figure 2. The programmable signal processing hardware 200 comprises a communication interface (I/F) 210 for receiving the (real) temperature data of the (real) temperature sensors 10A to 10E described above, generating the instruction for the system 100 for monitoring and/or controlling domestic hot water production and/or distribution to perform the temperature measurement on the hot water storage tank 20, receiving the measurement data from the (real) temperature sensors 10A to 10E, determining a temperature distribution pattern TDP of heat stored in the heat storage tank 20 and corresponding heat distribution pattern data, and, optionally, for determining an amount of heat stored in the heat storage tank and/or determining an amount of heat tapped from the heat storage tank, and for outputting display control signals for controlling the display device 215 to display the heat distribution pattern, the amount of heat stored in the heat storage tank and/or the amount of heat tapped from the heat storage tank. The signal processing apparatus 200 further comprises a processor, the control unit 2, (e.g. a Central Processing Unit, CPU, or Graphics Processing Unit, GPU) 220, a working memory 230 (e.g. a random access memory) and an instruction store 240 storing a computer program comprising the computer-readable instructions which, when executed by the processor 220, cause the processor 220 to perform various functions including those of the system 100 for monitoring and/or controlling domestic hot water production and/or distribution and optionally, a display control signal generator. The instruction store 240 may comprise a ROM (e.g. in the form of an electrically-erasable programmable read-only memory (EEPROM) or flash memory) which is pre-loaded with the computer-readable instructions. Alternatively, the instruction store 240 may comprise a RAM or similar type of memory, and the computer-readable instructions of the computer program can be input thereto from a computer program product, such as a non-transitory, computer-readable storage medium 250 in the form of a CD-ROM, DVD-ROM, etc. or a computer-readable signal 260 carrying the computer-readable instructions. In any case, the computer program, when executed by the processor, causes the processor to execute at least one of the methods of monitoring and/or controlling domestic hot water production and/or distribution described herein. It should be noted, however, that the controller 1 may alternatively be implemented in non-programmable hardware, such as an application-specific integrated circuit (ASIC).

In the present embodiment of the present disclosure, a combination 270 of the hardware components shown in Figure 4, comprising the processor 220, the working memory 230 and the instruction store 240, is configured to perform functions of the system 100 for monitoring and/or controlling domestic hot water production and/or distribution, which functions will now be described in detail below. In aspects like the present aspect of the present invention, where the system 100 comprises a display control signal generator, the functionality of this optional component also be provided by the combination 270 of the hardware components, together with the communication I/F 210.

As will become more apparent from the following description of the operations performed by the controller 1 and/or the system 100 of the present aspect, the controller 1 and/or the system 100 automatically processes temperatures and/or temperature date and optionally flow rates and/or flow rate data acquired by respective sensors, in order to determine a very accurate heat distribution pattern TDP of heat or equivalent hot water stored in the heat storage tank or hot water storage tank.

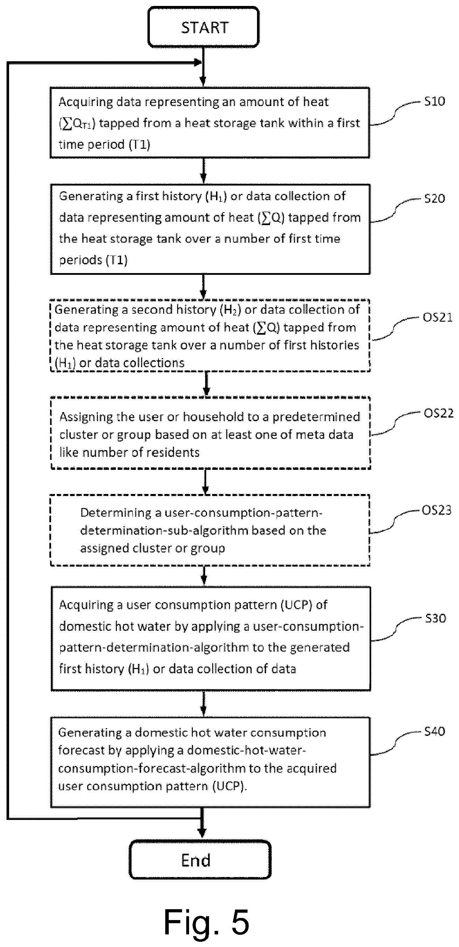

Figure 5 is a flow diagram illustrating a process of generating a domestic hot water consumption forecast according to one embodiment of the present disclosure.

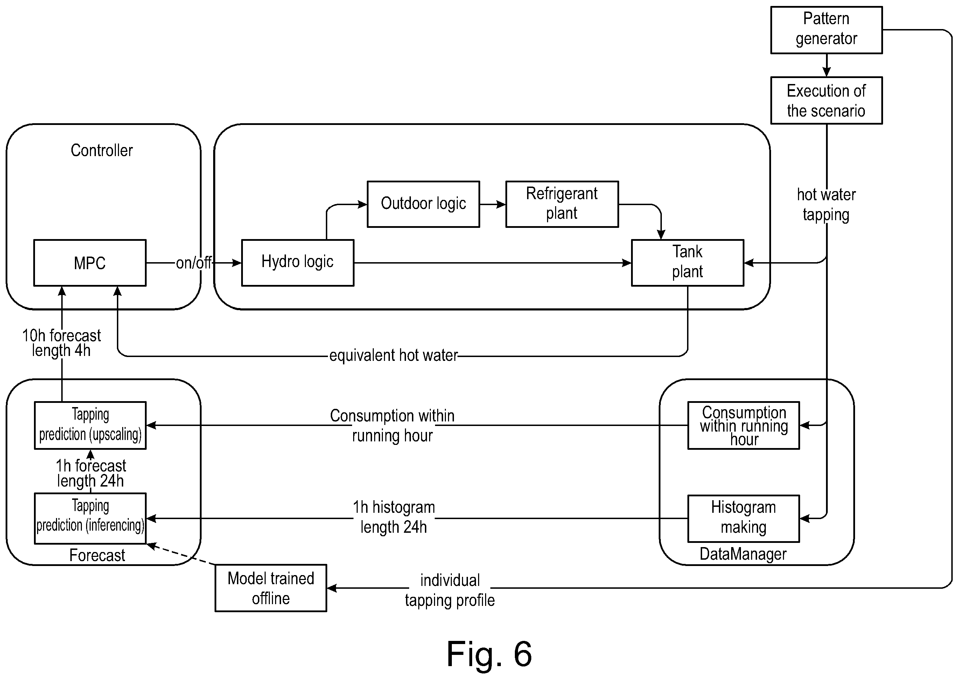

Figure 6 is a schematic illustration of a system for controlling domestic hot water production and/or distribution according to a further embodiment if the present disclosure.

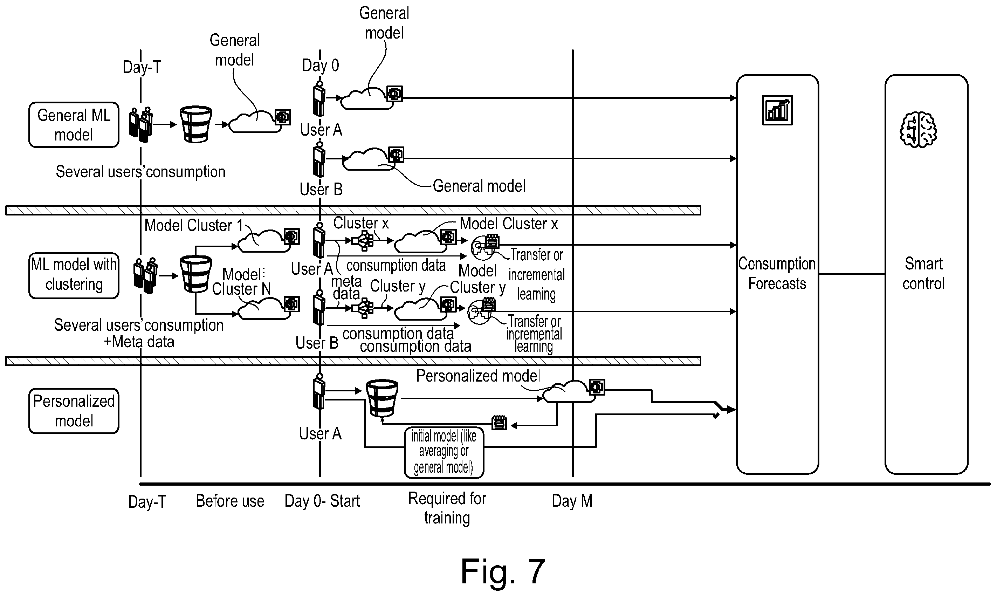

Figure 7 is a schematic illustration shown thee different models for generating a domestic hot water consumption forecast and using said for smart control of domestic hot water production and/or distribution.

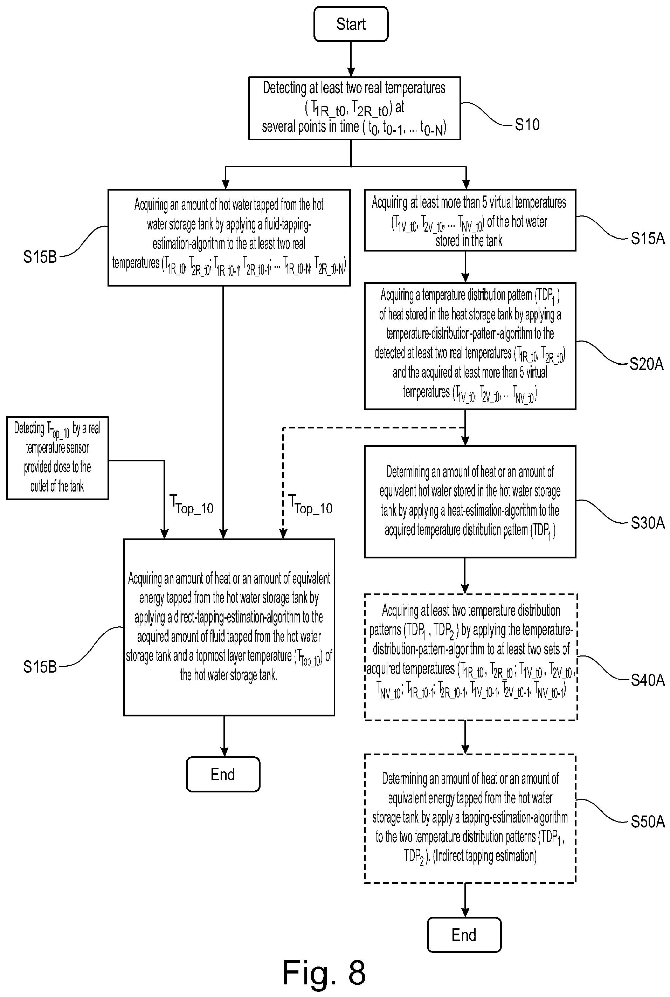

Figure 8 is a flow diagram illustrating a process by which the system 100 of Figure 2 acquires a temperature distribution pattern TDP₁ of heat stored in the heat storage tank 20 and determines an amount of heat or an amount of equivalent hot water stored in the tank 20 and optionally tapped from the heat storage tank 20. Moreover, Figure 5 illustrates an alternative process for acquiring an amount of heat or an amount of equivalent hot water tapped from the heat storage tank 20.

In process S10 of Figure 8, the controller 1, in particular the control unit 2, receives temperature data, particularly at least two real temperature data comprising each several real temperature measurements (T_{1R_t0}, T_{2R_t0}; T_{1R_t0-1}, T_{2R_t0-2}; T_{1R_t-n}, T_{2R_tn}) at several points in time (history), from real temperature sensors provided on the hot water storage tank 20 and configured to detect temperatures of the hot water stored in the tank 20.

In process S15A of Figure 8, the controller 1, in particular the control unit 2, acquires a plurality of virtual temperatures (T_{1V_t0}, T_{2V_t0}, ... T_{NV_t0}) of the hot water stored in the hot water storage tank 20 by applying a virtual-temperature-sensor-algorithm to the detected at least two real temperatures detected at least at few points in time.

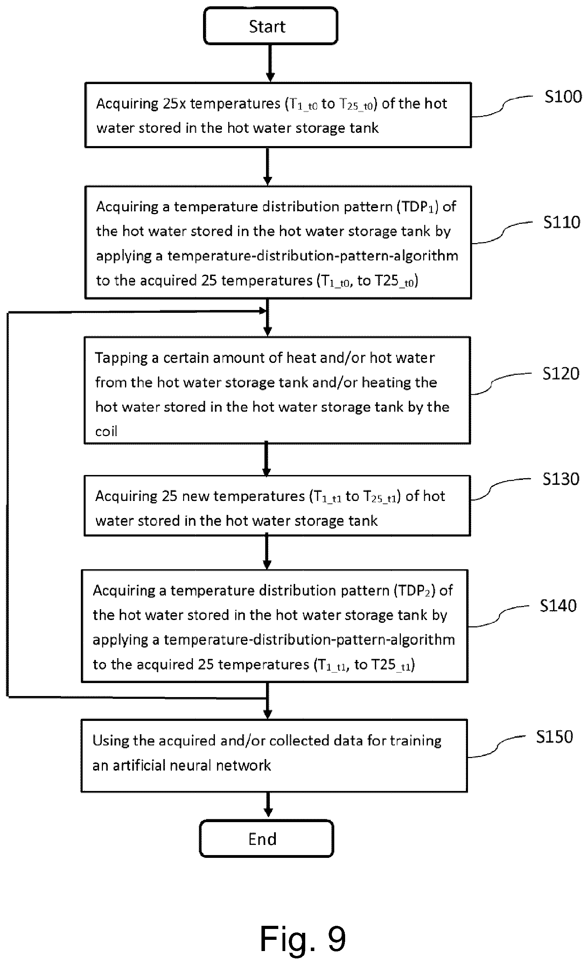

In process S20A of Figure 8, the controller 1, in particular the control unit 2, acquires a (first) temperature distribution pattern TDP₁ of the hot water stored in the hot water storage tank 20 by applying a temperature-distribution-pattern-algorithm to the acquired at least two real temperatures (T_{1R_t0}, T_{2R_t0}; T_{1R_t0-1}, T_{2R_t0-2}; T_{1R_t-n}, T_{2R_tn}) and the acquired plurality of virtual temperatures (T_{1V_t0}, T_{2V_t0}, ... T_{NV_t0}). The used machine-learning temperature-distribution-pattern-algorithm was trained before by using the above with reference to Figure 3 described system 100 for training/simulation. The training / machine-learning of the temperature-distribution-pattern-algorithm will be explained in more detail below with reference to Figures 9, 10 and 11.

Moreover, in process S30A of Figure 8, the controller 1, in particular the control unit 2, determines an amount of heat, in particular an amount of equivalent hot water, stored in the heat storage tank or hot water storage tank 20 by applying a heat-estimation-algorithm to the acquired temperature distribution pattern TDP₁.

Yet, in an optional process (indicated by dashed line), as shown in Figure 8, the process S20 is repeated at least once S40A and thereby at least two temperature distribution patterns TDP₁, TDP₂ are determined by applying the above described temperature-distribution-pattern-algorithm to at least two sets of acquired temperatures T_{1R_t0}, T_{2R_t0}, T_{1V_t0}, T_{2V_t0}, ... T_{NV_t0}; T_{1R_t0-1}, T_{2R_t0-1}, T_{1V_t0-1}, T_{2V_t0-1}, ... T_{NV_t0-1}).

In a further optional process (indicated by dashed line), in a process S50A shown in Figure 8 an amount of heat and/or amount of equivalent hot water, tapped from the heat storage tank or hot water storage tank 20 is determined by apply an indirect-tapping-estimation-algorithm to the two acquired temperature distribution patterns TDP₁, TDP₂.

As already explained above with respect to Figure 3, in the training phase of the system 100 (training system), the system 100 is not only provided with the at least two (real) temperature sensors, but instead is provided with for example 25 (real) temperature sensors. Accordingly, in the training phase (machine-learning phase) of system 100, the controller 1 receives 25 temperature data T_{1_t0}, T_{2_t0} ... T_{25_t0}.

Figure 9 is a flow diagram illustrating an offline data collecting process for a training process of the system, in particular of an artificial neural network of the system, in the training stage shown in Fig. 3. With "offline data collecting" is meant that the necessary data for training the neural network and the corresponding algorithms are collected before the training is actually performed. Meaning, at first, all necessary data are collected during a specified period, like a day, a week or several months. After the necessary data have been collected the data a pre-processed and then inputted in the neural network in order to train it. In process S100 of Figure 9, the controller 1, in particular the control unit 2 (processor), is receiving 25 real temperature data T_{1_t0} to T_{25_t0} of the hot water stored in the hot water storage tank 20, by using 25 real temperature sensors 10A to 10XY provided a long the height of the hot water storage tank 20.

In process S110 of Figure 9, the controller, in particular the control unit 2, determines a temperature distribution pattern TDP₁ of the hot water stored in the hot water storage tank 20 by processing the acquired temperatures T_{1_t0}, T_{2_t0} ... T_{1_t25-0} using the above described temperature-distribution-pattern-algorithm.

In process S120 of Figure 9, a certain amount of heat (kWh) and/or equivalent hot water (l) is tapped from the hot water storage tank using the flow rate sensor 30 provided at the outlet of the hot water storage tank and a top tank temperature sensor 10XY (the highest sensor of the real and virtual sensors). Moreover, optionally, a heating (kWh) of the stored hot water via the coil 21 is conducted while the flow of the fluid through the coil 21 is measured by the flow rate sensor 31 of the coil and the inlet and outlet temperatures of the fluid are measured by the inlet and outlet temperature sensors 15, 16 of the coil 21.

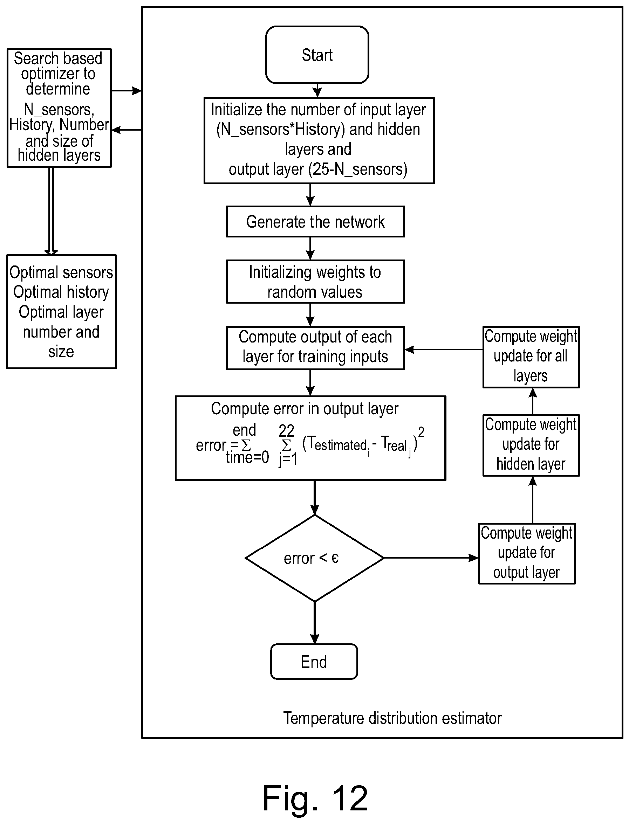

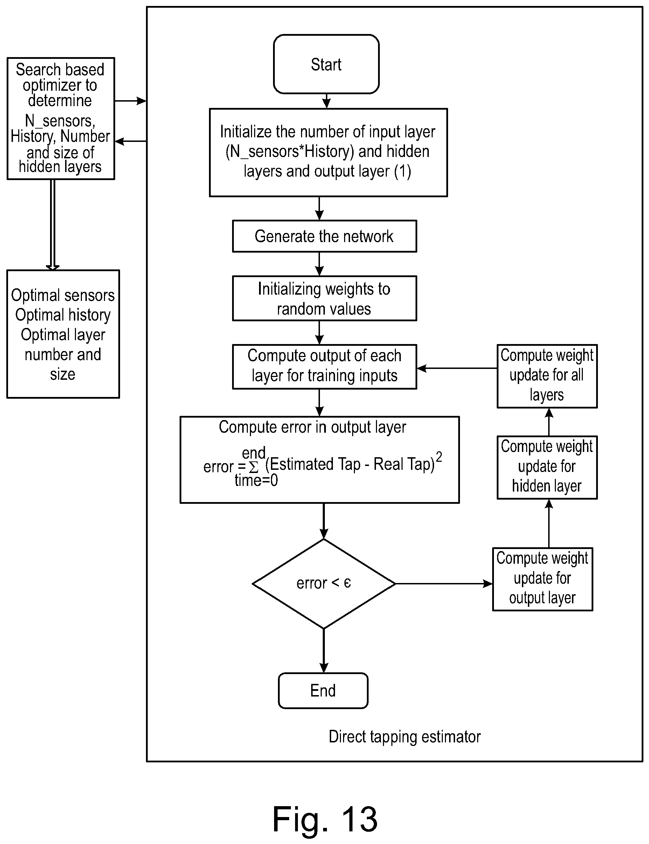

Moreover, in process S130 of Figure 9 new temperatures T_{1_t1} to T_{25_t1} of the hot water stored in the hot water storage tank 20 are acquired and in process S140, in line with the process S110, a temperature distribution pattern TDP₂ of the hot water stored in the hot water storage tank 20 is determined using the new acquired temperatures T_{1_t1} to T_{25_t1}. The above process is repeated continuously until sufficient data for training the neural network could be acquired and/or collected. In process S150 of Figure 9 the acquired and/or collected data are used for training the artificial neural network. The training will be explained in more detail below with reference to Figures 12 and 13.

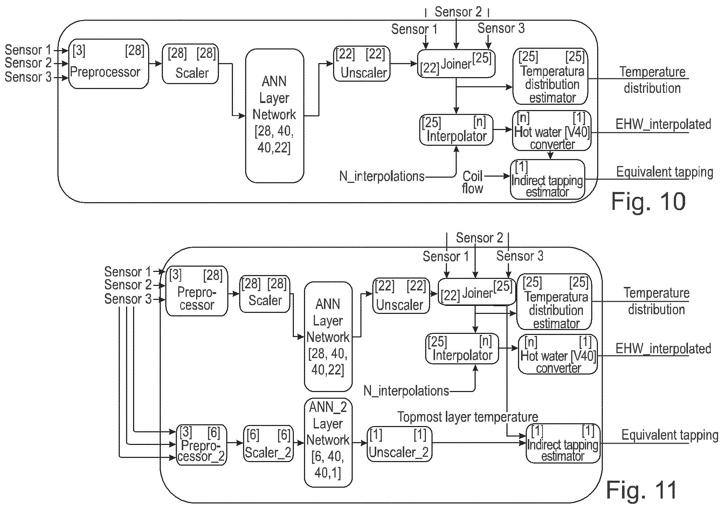

Figure 10 is a block diagram illustrating a process by which the system 100 of Figure 2 determines an amount of heat (remaining equivalent hot water at t₀ (EHW, V40)) stored in the heat storage tank, in accordance with an aspect of the present invention. As shown in Figure 10, the real temperatures detected by the at least two real temperature sensors 10A, 10B, in the present aspect Sensor 1, Sensor 2 and Sensor 3, are received by the controller 1, in particular by a pre-processor of the controller 1 or the control unit 2.

The pre-processor takes the best subset for the respective heat storage tank 20, pre-processes the real temperatures and/or temperature data received from the sensors 1 to 3 and calculates new features. By calculating new features it is meant that the pre-processor uses the history, for example real temperatures measured by the sensors 1 to 3 in the past, and provides a data package of example 28 data.

In a next step, a scaler scales the features down in preparation for a model of a neural network. The scaled features are input into an (artificial) neural network (ANN), which has been trained as described above and in more detail below with regard to Figures 12 and 13, and consists for example of two hidden layers of 40 nodes and estimates the remaining 22 virtual sensors (of the above described training system) based on the received features. Then, a unscaler scales the features back up to its original range and a joiner combines the data of the real three sensors 1 to 3 with the data of the virtual 22 sensors.

The data from the joiner are inputted into a temperature distribution estimator for determining the temperature distribution pattern TDP of the hot water storage tank.

Moreover, the data of the joiner are sent to an interpolator which increases the number of virtual sensors used for determining the temperature distribution pattern TDP in order to remove artefacts in the later converted or calculated heat / equivalent hot water (EHW, V40).

Additionally, after the interpolator the determined data are sent to a hot water-converter (EHW, V40) and after that optionally processed by a filter for further smoothening the output (EHW, V40) if the interpolator cannot remove all artefacts.

In a last optional step, a coil flow (l/min) detected by a flow sensor configured to detect a fluid flow through the coil is used to estimate tapping by an indirect tapping estimator. Thereby, it becomes possible to estimate the heat (kWh) and/or equivalent hot water (EHW, V40) tapped from the hot water storage tank 20. When estimating the heat (kWh) and/or equivalent hot water (l) that has been tapped from the hot water storage tank 20, the indirect tapping estimator may remove or compensate heat loss due to heat transfer to the surrounding environment and may remove or compensate heat that is added to the hot water storage tank 20 by heating via the heat coil 21.

Figure 11 is a block diagram illustrating a process by which the system 100 shown in Figure 2 directly determines an amount of heat and/or equivalent hot water (EHW, V40) tapped from the heat storage tank, in accordance with a further aspect of the present invention. The process or system (control unit) shown in Figure 11 comprises all features/steps or components of the process or system shown in Figure 10, except the indirect tapping estimator.

Additionally, the shown process includes a second (parallel) process-line for directly determining the amount of heat and/or equivalent hot water (EHW, V40) tapped from the heat storage tank. As shown, the three real temperatures detected by the sensors 1 to 3 are inputted into a second pre-processor that takes the best subset for the respective heat storage tank 20, pre-processes the real temperatures and calculates new features. Said features comprise the newly inputted real temperatures as well as previously inputted real temperatures (history).

A second scaler scales the features down in preparation for a second model of a second (artificial) neural network (ANN_2), which has been trained as described below, particularly with regard to Figure 13, and consists for example of two different layers of 40 nodes and estimates the amount of hot water tapped from the tank. Here, only an amount of water without any indication of energy stored in the tapped water is estimated. Then, a unscaler scales the features back up to its original range and provides the estimated amount of tapped hot water to a direct tapping estimator.

The direct tapping estimator estimates heat and/or equivalent hot water that has been tapped from the hot water storage tank by using the estimated amount of tapped hot water (provided by the second neural network) and a topmost layer temperature (believed real temperature of the hot water taped from the hot water storage tank) detected by the topmost temperature sensor of the 25 sensors (22 virtual sensors + 3 real sensors). When estimating the heat or equivalent hot water tapped from the hot water storage tank 20, the direct tapping estimator may remove or compensate heat loss due to heat transfer to the surrounding environment. Here, it is also possible to use instead of one of the 22 virtual sensors of the first neural network a real installed temperature sensor, thereby making the first neural network obsolete for the determination of the tapped heat or equivalent hot water. Figure 12 is a flow diagram illustrating a training process of the temperature distribution estimator of Figures 10 and 11 in accordance with an aspect of the present invention. As shown, in a first step, the numbers of input layers (number of real sensors * history (number of available data; points in time), hidden layers and output layers (number of virtual sensors) are initialized. In a next step the artificial neural network (ANN) is generated and the weights of the ANN are set in the beginning to random values.

In a next step, the output of each layer is computed for training inputs (the data which have been collected in the offline data collecting process) and an error in the output layer is computed based on the estimated values (temperatures) and the real values (temperatures).

Based on the computed error, new values (updates) for the weights of the output layer and the hidden layer of the ANN are computed and set. Then, the computing of the output of each layer using the training inputs is repeated, using the updated weights. This is done until the computed error is below a required threshold value. Once, the threshold value is reached, the training of the artificial neural network can be finished.

During the above described process, the number and position of real and virtual sensors, the history (number of temperature sets at several time points), and the optimal layer number and optimal weights can be optimized. This means, out of the for example 25 sensors, which are used during training of the neural network, the at least two sensors are chosen as the real sensors, which provide the overall best result in accuracy of estimating the temperature distribution pattern when compared with the real measured temperature distribution pattern. Same applies of the number of real and virtual sensors, number of considered previous data sets (history) and number of layers and size of the layers of the artificial neural network.

Figure 13 is a flow diagram illustrating a training process of the direct tapping estimator of Figure 11 in accordance with a further aspect of the present invention. Said process is in basic the same machine-learning process as shown in Figure 12, except that instead of temperatures (temperature distribution patterns) amounts of hot water tapped from the hot water storage tank are estimated and/or trained. Accordingly, in the step of computing the error in the output layer, the estimated amount of heat and/or equivalent hot water tapped from the hot water storage tank is compared with real values measured by a flow rate sensor and if applicable a temperature sensor. By this training process the second neural network of Fig. 11 is trained.

The regression-algorithm described above may, as in the present aspect, be a neural network. Neural networks automatically generate identifying characteristics by processing the input data, such as the temperature data detected by temperature sensors 10A to 10XY, the heat coil input and/or output temperature data detected by the heat coil temperature sensors 15, 16 and the flow rate data detected by the flow rate sensors 30, 31, without any prior knowledge.

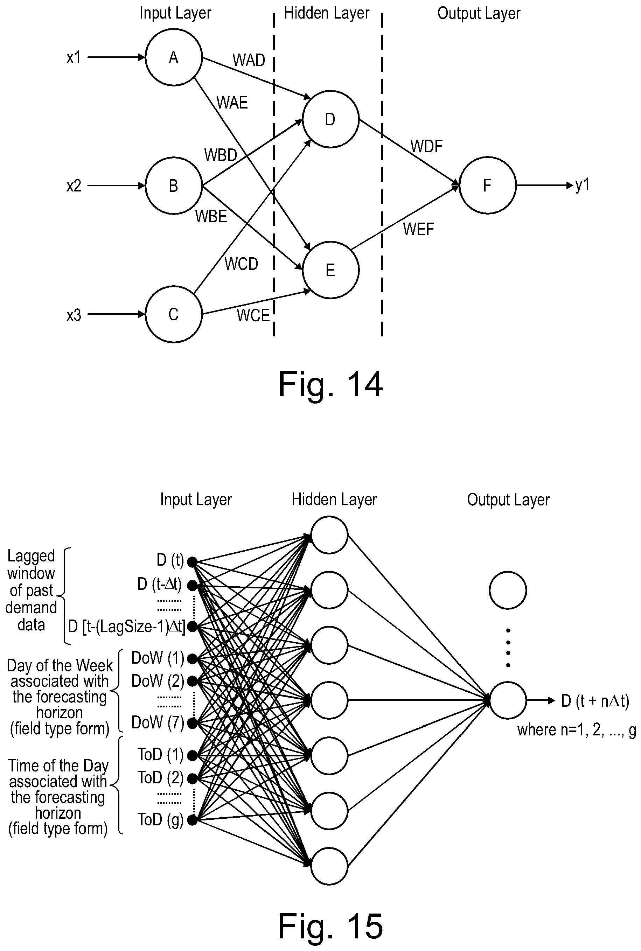

As illustrated in Figure 14, in general, a neural network consists of an input layer and an output layer, as well as multiple hidden layers. Each of the layers is composed of a plurality of artificial neurons (labelled A to F in Figure 14), and each layer may perform different kinds of transformations on their inputs. Each artificial neuron may be connected to multiple artificial neurons in adjacent layers. The output of each artificial neuron is computed by some non-linear function of the sum of its inputs. Artificial neurons and the connections therebetween typically have respective weights (WAD, WAE, etc. in Figure 14) which determined the strength of the signal at a given connection. These weights are adjusted as learning proceeds, thereby adjusting the output of the neural network. Signals travel from the first layer (the input layer), to the last layer (the output layer), and may traverse the layers multiple times.

Figure 15 is a schematic illustration of a neural network of a user-consumption-pattern-determination-algorithm in accordance with an embodiment of the present disclosure.

Figure 16 is a diagram illustrating a user accumulative consumption pattern acquired by the system for monitoring and/or controlling domestic hot water production and/or distribution shown in Fig. 2. Figure 16 shows the consumed or tapped equivalent hot water volume in m³ during weekdays and weekends. As can be taken from Figure 16, the acquired consumption pattern (over time) does not only change during the day but also for example between weekdays and weekends.

Moreover, Figure 17 is a schematic illustration showing a heat storage tank in a configuration without a coil.

### REFERENCE LIST

- 1: Controller
- 2: Control Unit
- 10A: (First) Real Temperature Sensor
- 10B: (Second) Real Temperature Sensor
- 10E: (Fifth) Real Temperature Sensor
- 15: Inlet Temperature Sensor Coil
- 16: Outlet Temperature Sensor Coil
- 20: Heat Storage Tank
- 21: Heat coil
- 22A: Inlet / Cold-Water Intake
- 22B: Outlet / Hot-Water Outlet
- 30: Hot-Water Outlet Flow Rate Sensor
- 31: Heating Fluid Flow Rate Sensor

## Claims

1. A computer-implemented method of controlling domestic hot water production and/or distribution, particularly by controlling a system (100) for producing and/or distributing domestic hot water, the method comprising:
acquiring a user consumption pattern (UCP) of domestic hot water by using a computer-implemented method of acquiring a user consumption pattern (UCP) of domestic hot water,
generating a domestic hot water consumption forecast by applying a domestic-hot-water-consumption-forecast-algorithm to the acquired user consumption pattern (UCP), and
controlling domestic hot water production and/or distribution based on the generated domestic hot water consumption forecast,
the computer-implemented method of acquiring a user consumption pattern (UCP) of domestic hot water comprising:
acquiring (S10)) data representing an amount of heat (ΣQ_{T1}), in particular an amount of equivalent energy, tapped from a heat storage tank (20), in particular a pressurized tank, within a first time period (T1), wherein the first time period (T1) in connection with a number of first time periods (T1) defines a prediction horizon,
generating (S20) a first history (H₁) or data collection of data representing amount of heat (ΣQ), in particular cumulative heat, tapped from the heat storage tank (20) over the prediction horizon, and
acquiring (S30) a user consumption pattern (UCP) of domestic hot water by applying a user-consumption-pattern-determination-algorithm to the generated first history (H₁) or data collection of data representing amount of heat (ΣQ) tapped from the heat storage tank (20),
wherein the user-consumption-pattern-determination-algorithm is an algorithm, in particular a time-series-forecast-algorithm, trained on one or more histories or data collections representing amount of heat (ΣQ) tapped and defining user consumption patterns of domestic hot water using one or more machine-learning-algorithms,
the method being **characterised in that**:
the user-consumption-pattern-determination-algorithm is trained on:
history data or one or more data collections representing amount of heat (ΣQ) tapped by a plurality of users or households over a second time period (T2), wherein the second time period is a training horizon, and
hour of day, in particular of the respective first time period (T1), in particular within the respective history or data collection of data representing amount of heat (ΣQ) tapped; and
the user-consumption-pattern-determination-algorithm is updated based on the generated first history (H₁) or data collection after the prediction horizon.

2. The computer-implemented method according to claim 1, further comprising:
generating (S40) a second history (H₂) or data collection of data representing amount of heat (ΣQ) tapped from the heat storage tank (20) over a number of first histories (H₁) or data collections, wherein the first history (H₁) or data collection preferably extends over a time period of one day or 24 hours and the second history (H₂) or data collection preferably extends over a time period of one week or 7 days or 168 hours.

3. The computer-implemented method according to claim 1 or 2, wherein
the first time period (T1) extends over one week, two days, one day, 12 hours, 8 hours, 6 hours, 4 hours, 1 hour, 30 minutes, 10 minutes or 1 minute, and/or
the number of first time periods (T1) of the first history (H₁) or data collection is 1, 2, 3, 4, 6, 24, 48, 144 or 1440.

4. The computer-implemented method according to any one of the preceding claims, wherein the second time period (T2) extends over 30 days, 60 days, 90 days, 180 days, one year or two years.

5. The computer-implemented method according to any one of the preceding claims, wherein the user-consumption-pattern-determination-algorithm is further trained on:
day of week, in particular of the respective first time period (T1) and/or of the respective history or data collection of data representing amount of heat (ΣQ) tapped, and/or
day of the year and/or week of the year and/or month of the year, in particular of the respective first time period and/or the respective history data or data collection, and/or
weather condition, in particular at the respective first time period (T1) and/or of the respective history or data collection of data representing amount of heat (ΣQ) tapped, and/or
outside temperature, in particular at the respective first time period (T1) and/or of the respective history or data collection of data representing amount of heat (ΣQ) tapped, and/or
vacation situation of the user or the household, in particular at the respective first time period (T1) and/or of the respective history or data collection of data representing amount of heat (ΣQ) tapped, and/or
energy price, in particular at the respective first time period (T1) and/or of the respective history or data collection of data representing amount of heat (ΣQ) tapped, and/or
green energy availability, in particular at the respective first time period (T1) and/or of the respective history or data collection of data representing amount of heat (ΣQ) tapped, and/or
geographical location, in particular at the respective first time period (T1) and/or of the respective history or data collection of data representing amount of heat (ΣQ) tapped, and/or
cultural factors, in particular at the respective first time period (T1) and/or of the respective history or data collection of data representing amount of heat (ΣQ) tapped.

6. The computer-implemented method according to any one of the preceding claims, wherein the user-consumption-pattern-determination-algorithm also considers meta data when determining the user consumption pattern (UCP), where the meta data are selected from the group comprising: number of residents, age(s) of the resident(s), average age of the residents, gender of the residents, geographical location, cultural factors, annual hot water consumption.

7. The computer-implemented method according to claim 6, wherein the user-consumption-pattern-determination-algorithm further comprises:
assigning the user or household to a predetermined cluster or group based on at least one of the meta data,
determining a user-consumption-pattern-determination-sub-algorithm based on the assigned cluster or group,
wherein the user-consumption-pattern-determination-sub-algorithm was preferably trained on the data of a plurality of users or households having the same at least one of the meta data.

8. The computer-implemented method according to claim 7, wherein, after the user-consumption-pattern-determination-sub-algorithm was determined, an individual-user-consumption-pattern-determination-algorithm is developed by training a pre-set user-consumption-pattern-determination-sub-algorithm based on acquired first history (H₁) data or one or more data collections and/or second history (H₂) data or one or more data collections representing amount of heat (ΣQ) tapped by the user or the household over a third time period (T3), wherein the third timer period (T3) preferably extends over 1 day, 2 days, 10 days, 30 days, 60 days, 90 days, 180 days, one year or continuously.

9. The computer-implemented method according to any one of the preceding claims, wherein the user-consumption-pattern-determination-algorithm is trained to determine habits of individual users including: taking shower in the morning, taking shower in the evening, taking bath in the evening, using an average amount of heat (ΣQ), in particular an amount of equivalent energy, for taking a shower or a bath.

10. The computer-implemented method according to any one of claims 1 to 9, wherein, in the event of a detection of a deviation when generating the domestic hot water consumption forecast, the domestic hot water consumption forecast is automatically adjusted and/or the user is required to confirm the detected deviation, preferably via a control terminal, and depending on the confirmation and/or input of the user the domestic hot water consumption forecast is adjusted, wherein the deviation comprises at least one of a vacation situation of the user or the household, a weather condition, or unexpected events like an earlier shower than average, one or more guests, or a party.

11. The computer-implemented method according to any one of claims 1 to 10, wherein the domestic hot water consumption forecast is determined for a fourth time period (T4) of 10 minutes, 30 minutes, 1 hour, 2 hours, 4 hours, 6 hours or 12 hours.

12. The computer-implemented method according to any one of claims 1 to 11, wherein events comprising vacation of the user or household, one or more guests, party, etc. are determined by accessing online data like calendar and/or by input of the user, preferably via a control terminal.

13. The computer-implemented method according to any one of the preceding claims, wherein an amount of heat over a control period T_period to be stored in the heat storage tank (20) is determined based on the generated domestic hot water consumption forecast.

14. The computer-implemented method according to claim 13, wherein the amount of heat over the control period T_period to be stored in the heat storage tank (20) is determined by applying a heat-control-algorithm to the generated domestic hot water consumption forecast, wherein the heat-control-algorithm is preferably a trained algorithm.

15. The computer-implemented method according to claim 14, wherein the heat-control-algorithm is trained on: electric energy price , local or green energy availability, weather condition, energy carbon footprint, weather forecast, etc.

16. A controller (1) for generating a domestic hot water consumption forecast having a control unit (2) and means adapted to execute the steps of the method of claims 1 to 15.

17. A controller (1) for controlling domestic hot water production and/or distribution, particularly by controlling a system (100) for producing and/or distributing domestic hot water, having a control unit (2) and means adapted to execute the steps of the method of claims 1 to 15.

18. A system (100) for producing and/or distributing domestic hot water, comprising:
a controller, in particular the controller (1) according to claim 16, and means adapted to execute the steps of the method of any one of the claims 1 to 15.

19. The system (100) according to claim 18, further comprising:
a heat storage tank (20), particularly a hot water storage tank (20), more particularly a pressurized tank, and
means adapted to determine an amount of heat, in particular an amount of equivalent energy, stored in the heat storage tank (20) and/or to determine an amount of heat, in particular an amount of equivalent energy, tapped from the heat storage tank (20).

20. A computer program comprising instructions to cause the system of claim 18 or 19 to execute the steps of the method of claims 1 to 15, and/or
to cause the controller of claim 16 to execute the steps of the method of claims 1 to 15, and/or
to cause the controller of claim 17 to execute the steps of the method of claims 1 to 15.

21. A computer-readable medium having stored thereon the computer program of claim 20.

## Patentansprüche

1. Computerimplementiertes Verfahren zum Steuern von Brauchwarmwasserbereitung und/oder -verteilung, insbesondere durch Steuern eines Systems (100) zur Bereitung und/oder Verteilung von Brauchwarmwasser, wobei das Verfahren Folgendes umfasst:
Erfassen eines Benutzerverbrauchsmusters (UCP) von Brauchwarmwasser durch Verwenden eines computerimplementierten Verfahrens zum Erfassen eines Benutzerverbrauchsmusters (UCP) von Brauchwarmwasser,
Erzeugen einer Brauchwarmwasserverbrauchsvorhersage durch Anwenden eines Brauchwarmwasserverbrauchsvorhersage-Algorithmus auf das erfasste Benutzerverbrauchsmuster (UCP), und
Steuern von Brauchwarmwasserbereitung und/oder -verteilung basierend auf der erzeugten Brauchwarmwasserverbrauchvorhersage,
wobei das computerimplementierte Verfahren zum Erfassen eines Benutzerverbrauchsmusters (UCP) von Brauchwarmwasser Folgendes umfasst:
Erfassen (S10)) von Daten, die eine Menge von Wärme (ΣQ_{T1}), insbesondere eine Menge von äquivalenter Energie darstellen, die von einem Wärmespeichertank (20), insbesondere einem druckbeaufschlagten Tank, innerhalb einer ersten Zeitperiode (T1) abgegriffen wurde, wobei die erste Zeitperiode (T1) in Verbindung mit einer Anzahl von ersten Zeitperioden (T1) einen Vorhersagehorizont definiert,
Erzeugen (S20) eines ersten Verlaufs (H₁) oder Datensammlung von Daten, die Menge von Wärme (ΣQ), insbesondere kumulativer Wärme darstellen, die von dem Wärmespeichertank (20) über den Vorhersagehorizont abgegriffen wurde, und
Erfassen (S30) eines Benutzerverbrauchsmusters (UCP) von Brauchwarmwasser durch Anwenden eines Benutzerverbrauchsmuster-Bestimmungsalgorithmus auf den erzeugten ersten Verlauf (H₁) oder Datensammlung von Daten, die Menge von Wärme (∑Q) darstellen, die von dem Wärmespeichertank (20) abgegriffen wurde, wobei der Benutzerverbrauchsmuster-Bestimmungsalgorithmus ein Algorithmus, insbesondere ein Zeitserien-Vorhersagealgorithmus ist, der auf einem oder mehreren Verläufen oder Datensammlungen trainiert wurde, die Menge von Wärme (∑Q) darstellen, die abgegriffen wurde, und Benutzerverbrauchsmuster von Brauchwarmwasser unter Verwendung von einem oder mehreren Algorithmen maschinellen Lernens definiert,
wobei das Verfahren **dadurch gekennzeichnet ist, dass**:
der Benutzerverbrauchsmuster-Bestimmungsalgorithmus trainiert ist auf:
Verlaufsdaten oder einer oder mehreren Datensammlungen, die Menge von Wärme (∑Q) darstellen, die durch eine Vielzahl von Benutzern oder Haushalten über eine zweite Zeitperiode (T2) abgegriffen wurde, wobei die zweite Zeitperiode ein Trainingshorizont ist, und
Stunde des Tages, insbesondere der jeweils ersten Zeitperiode (T1), insbesondere innerhalb des jeweiligen Verlaufs oder Datensammlung von Daten, die Menge von Wärme (∑Q) darstellen, die abgegriffen wurde; und
wobei der Benutzerverbrauchsmuster-Bestimmungsalgorithmus basierend auf dem erzeugten ersten Verlauf (H₁) oder Datensammlung nach dem Vorhersagehorizont aktualisiert wird.

2. Computerimplementiertes Verfahren nach Anspruch 1, weiter umfassend:
Erzeugen (S40) eines zweiten Verlaufs (H₂) oder Datensammlung von Daten, die Menge von Wärme (∑Q) darstellen, die von dem Wärmespeichertank (20) über eine Anzahl von ersten Verläufen (H₁) oder Datensammlungen abgegriffen wurde, wobei
sich der erste Verlauf (H₁) oder Datensammlung vorzugsweise über eine Zeitperiode von einem Tag oder 24 Stunden erstreckt und sich der zweite Verlauf (H₂) oder Datensammlung vorzugsweise über eine Zeitperiode von einer Woche oder 7 Tagen oder 168 Stunden erstreckt.

3. Computerimplementiertes Verfahren nach Anspruch 1 oder 2, wobei
sich die erste Zeitperiode (T1) über eine Woche, zwei Tage, einen Tag, 12 Stunden, 8 Stunden, 6 Stunden, 4 Stunden, 1 Stunde, 30 Minuten, 10 Minuten oder 1 Minute erstreckt und/oder
die Anzahl der ersten Zeitperioden (T1) des ersten Verlaufs (H₁) oder Datensammlung 1, 2, 3, 4, 6, 24, 48, 144 oder 1440 beträgt.

4. Computerimplementiertes Verfahren nach einem der vorstehenden Ansprüche, wobei sich die zweite Zeitperiode (T2) über 30 Tage, 60 Tage, 90 Tage, 180 Tage, ein Jahr oder zwei Jahre erstreckt.

5. Computerimplementiertes Verfahren nach einem der vorstehenden Ansprüche, wobei der Benutzerverbrauchsmuster-Bestimmungsalgorithmus weiter trainiert ist auf:
Tag der Woche, insbesondere der jeweiligen ersten Zeitperiode (T1) und/oder des jeweiligen Verlaufs oder Datensammlung von Daten, die Menge von Wärme (∑Q) darstellen, die abgegriffen wurde, und/oder
Tag des Jahrs und/oder Woche des Jahrs und/oder Monat des Jahrs, insbesondere der jeweiligen ersten Zeitperiode und/oder der jeweiligen Verlaufsdaten oder Datensammlung, und/oder
Wetterbedingung, insbesondere in der jeweiligen ersten Zeitperiode (T1) und/oder jeweiligen Verlauf oder Datensammlung von Daten, die Menge von Wärme (∑Q) darstellen, die abgegriffen wurde, und/oder
Außentemperatur, insbesondere in der jeweiligen ersten Zeitperiode (T1) und/oder jeweiligen Verlauf oder Datensammlung von Daten, die Menge von Wärme (∑Q) darstellen, die abgegriffen wurde, und/oder
Urlaubssituation des Benutzers oder Haushalts, insbesondere in der jeweiligen ersten Zeitperiode (T1) und/oder jeweiligen Verlauf oder Datensammlung von Daten, die Menge von Wärme (∑Q) darstellen, die abgegriffen wurde, und/oder
Energiepreise, insbesondere in der jeweiligen ersten Zeitperiode (T1) und/oder jeweiligen Verlauf oder Datensammlung von Daten, die Menge von Wärme (∑Q) darstellen, die abgegriffen wurde, und/oder
Verfügbarkeit von grüner Energie, insbesondere in der jeweiligen ersten Zeitperiode (T1) und/oder jeweiligen Verlauf oder Datensammlung von Daten, die Menge von Wärme (∑Q) darstellen, die abgegriffen wurde, und/oder
geografischem Standort, insbesondere in der jeweiligen ersten Zeitperiode (T1) und/oder jeweiligen Verlauf oder Datensammlung von Daten, die Menge von Wärme (∑Q) darstellen, die abgegriffen wurde, und/oder
kulturellen Faktoren, insbesondere in der jeweiligen ersten Zeitperiode (T1) und/oder jeweiligen Verlauf oder Datensammlung von Daten, die Menge von Wärme (∑Q) darstellen, die abgegriffen wurde.

6. Computerimplementiertes Verfahren nach einem der vorstehenden Ansprüche, wobei
der Benutzerverbrauchsmuster-Bestimmungsalgorithmus bei Bestimmen des Benutzerverbrauchsmusters (UCP) auch Metadaten berücksichtigt, wobei die Metadaten ausgewählt werden aus der Gruppe umfassend: Anzahl von Bewohnern, Alter des oder der Bewohner, Durchschnittsalter der Bewohner, Geschlecht der Bewohner, geographischen Standort, kulturelle Faktoren, jährlichen Warmwasserverbrauch.

7. Computerimplementiertes Verfahren nach Anspruch 6, wobei der Benutzerverbrauchsmuster-Bestimmungsalgorithmus weiter Folgendes umfasst:
Zuweisen des Benutzers oder Haushalts zu einem vorbestimmten Cluster oder Gruppe, basierend auf mindestens einem der Metadaten,
Bestimmen eines Benutzerverbrauchsmuster-Bestimmungs-Unteralgorithmus basierend dem zugewiesenen Cluster oder Gruppe,
wobei der Benutzerverbrauchsmuster-Bestimmungs-Unteralgorithmus vorzugsweise auf den Daten einer Vielzahl von Benutzern oder Haushalten trainiert wurde, die das gleiche der mindestens einen Metadaten aufweisen.

8. Computerimplementiertes Verfahren nach Anspruch 7, wobei, nachdem der Benutzerverbrauchsmuster-Bestimmungs-Unteralgorithmus bestimmt wurde, durch Trainieren eines voreingestellten Benutzerverbrauchsmuster-Bestimmungs-Unteralgorithmus basierend auf erfassten ersten Verlaufsdaten (H₁) oder einer oder mehreren Datensammlungen und/oder zweiten Verlaufsdaten (H₂) oder einer oder mehreren Datensammlungen, die Menge von Wärme (∑Q) darstellen, die durch den Benutzer oder Haushalt über eine dritte Zeitperiode (T3) abgegriffen wurde, ein Einzelbenutzerverbrauchsmuster-Bestimmungsalgorithmus entwickelt wird, wobei sich die dritte Zeitperiode (T3) vorzugsweise über 1 Tag, 2 Tage, 10 Tage, 30 Tage, 60 Tage, 90 Tage, 180 Tage, eine Jahr oder kontinuierlich erstreckt.

9. Computerimplementiertes Verfahren nach einem der vorstehenden Ansprüche, wobei der Benutzerverbrauchsmuster-Bestimmungsalgorithmus so trainiert ist, dass er Gewohnheiten von einzelnen Benutzern bestimmt, die Folgendes einschließen: Duschen am Morgen, Duschen am Abend, Baden am Abend, Verwenden einer durchschnittlichen Menge von Wärme (ΣQ), insbesondere einer Menge von äquivalenter Energie zum Duschen oder Baden.

10. Computerimplementierte Verfahren nach einem der Ansprüche 1 bis 9, wobei in dem Fall von Erkennung einer Abweichung bei Erzeugen der Brauchwarmwasserverbrauchsvorhersage die Brauchwarmwasserverbrauchsvorhersage automatisch angepasst wird und/oder der Benutzer die erkannte Abweichung vorzugsweise über ein Steuerendgerät bestätigen muss und abhängig von der Bestätigung und/oder Eingabe des Benutzers die Brauchwarmwasserverbrauchsvorhersage angepasst wird, wobei die Abweichung mindestens eines umfasst von einer Urlaubssituation des Benutzers oder Haushalts, einer Wetterbedingung oder unerwarteten Ereignissen, wie Dusche früher als durchschnittlich, ein oder mehrere Gäste oder eine Party.

11. Computerimplementierte Verfahren nach einem der Ansprüche 1 bis 10, wobei die Brauchwarmwasserverbrauchsvorhersage für eine vierte Zeitperiode (T4) von 10 Minuten, 30 Minuten, 1 Stunde, 2 Stunden, 4 Stunden, 6 Stunden oder 12 Stunden bestimmt wird.

12. Computerimplementierte Verfahren nach einem der Ansprüche 1 bis 11, wobei Ereignisse, die Urlaub des Benutzers oder Haushalts, einen oder mehrere Gäste, Party usw. umfassen, durch Online-Zugriff auf Daten wie Kalender und/oder durch Eingabe des Benutzer, vorzugsweise über ein Steuerendgerät bestimmt werden.

13. Computerimplementiertes Verfahren nach einem der vorstehenden Ansprüche, wobei eine Menge von Wärme, die in dem Wärmespeichertank (20) gespeichert werden soll, über eine Kontrollperiode T_period basierend auf der erzeugten Brauchwarmwasserverbrauchsvorhersage bestimmt wird.

14. Computerimplementiertes Verfahren nach Anspruch 13, wobei die Menge von Wärme, die in dem Wärmespeichertank (20) gespeichert werden soll, über eine Kontrollperiode T_period durch Anwenden eines Wärmesteueralgorithmus auf die erzeugte Brauchwarmwasserverbrauchsvorhersage bestimmt wird, wobei der Wärmesteueralgorithmus vorzugsweise ein trainierter Algorithmus ist.

15. Computerimplementiertes Verfahren nach Anspruch 14, wobei der Wärmesteueralgorithmus trainiert ist auf: Preis von elektrischer Energie, Verfügbarkeit von lokaler oder grüner Energie, Wetterbedingung, energiebedingtem CO₂-Fußabdruck, Wettervorhersage usw.

16. Steuerung (1) zum Erzeugen einer Brauchwarmwasserverbrauchsvorhersage, die eine Steuereinheit (2) und Mittel aufweist, die so angepasst sind, dass sie die Schritte des Verfahrens nach den Ansprüchen 1 bis 15 ausführen.

17. Steuerung (1) zum Steuern von Brauchwarmwasserbereitung und/oder -verteilung, insbesondere durch Steuern eines Systems (100) zur Bereitung und/oder Verteilung von Brauchwarmwasser, das eine Steuereinheit (2) und Mittel aufweist, die so angepasst sind, dass sie die Schritte des Verfahrens nach den Ansprüchen 1 bis 15 ausführen.

18. System (100) zur Bereitung und/oder Verteilung von Brauchwarmwasser, umfassend:
eine Steuerung, insbesondere die Steuerung (1) nach Anspruch 16, und Mittel , die so angepasst sind, dass sie die Schritte des Verfahrens nach den Ansprüchen 1 bis 15 ausführen.

19. System (100) nach Anspruch 18, weiter umfassend:
einen Wärmespeichertank (20), insbesondere einen Warmwasserspeichertank (20), ganz besonders einen druckbeaufschlagten Tank und
Mittel, die so angepasst sind, dass sie eine Menge von Wärme, insbesondere eine Menge von äquivalenter Energie bestimmen, die in dem Wärmespeichertank (20) gespeichert ist, und/oder eine Menge von Wärme, insbesondere eine Menge von äquivalenter Energie bestimmen, die von dem Wärmespeichertank (20) abgegriffen wurde.

20. Computerprogramm, umfassend Anweisungen, um zu bewirken, dass das System nach Anspruch 18 oder 19 die Schritte des Verfahrens nach den Ansprüchen 1 bis 15 ausführt, und/oder
um zu bewirken, dass die Steuerung nach Anspruch 16 die Schritte des Verfahrens nach den Ansprüchen 1 bis 15 ausführt, und/oder
um zu bewirken, dass die Steuerung nach Anspruch 17 die Schritte des Verfahrens nach den Ansprüchen 1 bis 15 ausführt.

21. Computerlesbaren Medium, das darauf gespeichert das Computerprogramm nach Anspruch 20 aufweist.

## Revendications

1. Procédé mis en œuvre par ordinateur de commande de la production et/ou de la distribution d'eau chaude domestique, en particulier en commandant un système (100) destiné à produire et/ou à distribuer de l'eau chaude domestique, le procédé comprenant :
l'acquisition d'un modèle de consommation utilisateur (UCP) d'eau chaude domestique en utilisant un procédé mis en œuvre par ordinateur d'acquisition d'un modèle de consommation utilisateur (UCP) d'eau chaude domestique,
la génération d'une prévision de consommation d'eau chaude domestique en appliquant un algorithme de prévision de consommation d'eau chaude domestique au modèle de consommation utilisateur (UCP) acquis, et
la commande de la production et/ou de la distribution d'eau chaude domestique sur la base de la prévision de consommation d'eau chaude domestique générée,
le procédé mis en œuvre par ordinateur d'acquisition d'un modèle de consommation utilisateur (UCP) d'eau chaude domestique comprenant :
l'acquisition (S10) de données représentant une quantité de chaleur (ΣQ_{T1}), en particulier une quantité d'énergie équivalente, soutirée d'un réservoir de stockage de chaleur (20), en particulier d'un réservoir sous pression, pendant une première période de temps (T1), dans lequel la première période de temps (T1) en liaison avec un nombre de premières périodes de temps (T1) définit un horizon de prédiction,
la génération (S20) d'un premier historique (H₁) ou recueil de données de données représentant une quantité de chaleur (ΣQ), en particulier une chaleur cumulée, soutirée du réservoir de stockage de chaleur (20) sur l'horizon de prédiction, et
l'acquisition (S30) d'un modèle de consommation utilisateur (UCP) d'eau chaude domestique en appliquant un algorithme de détermination de modèle de consommation utilisateur au premier historique (H₁) ou recueil de données généré de données représentant la quantité de chaleur (∑Q) soutirée du réservoir de stockage de chaleur (20),
dans lequel l'algorithme de détermination de modèle de consommation utilisateur est un algorithme, en particulier un algorithme de prévision chronologique, formé sur un ou plusieurs historiques ou recueils de données représentant la quantité de chaleur (∑Q) soutirée et définissant des modèles de consommation utilisateur d'eau chaude domestique en utilisant un ou plusieurs algorithmes d'apprentissage automatique,
le procédé étant **caractérisé en ce que** :
l'algorithme de détermination de modèle de consommation utilisateur est formé sur :
des données d'historique ou un ou plusieurs recueils de données représentant la quantité de chaleur (∑Q) soutirée par une pluralité d'utilisateurs ou de ménages sur une deuxième période de temps (T2), dans lequel la deuxième période de temps est un horizon de formation, et
l'heure du jour, en particulier de la première période de temps (T1) respective, en particulier dans l'historique ou le recueil de données respectif de données représentant la quantité de chaleur (∑Q) soutirée ; et
l'algorithme de détermination de modèle de consommation utilisateur est mis à jour sur la base du premier historique (H₁) ou recueil de données généré après l'horizon de prédiction.

2. Procédé mis en œuvre par ordinateur selon la revendication 1, comprenant en outre :
la génération (S40) d'un deuxième historique (H₂) ou recueil de données de données représentant la quantité de chaleur (∑Q) soutirée du réservoir de stockage de chaleur (20) sur un nombre de premiers historiques (H₁) ou recueils de données, dans lequel le premier historique (H₁) ou recueil de données s'étend de préférence sur une période de temps d'un jour ou de 24 heures et le deuxième historique (H₂) ou recueil de données s'étend de préférence sur une période de temps d'une semaine ou de 7 jours ou de 168 heures.

3. Procédé mis en œuvre par ordinateur selon la revendication 1 ou la revendication 2, dans lequel
la première période de temps (T1) s'étend sur une semaine, deux jours, un jour, 12 heures, 8 heures, 6 heures, 4 heures, 1 heure, 30 minutes, 10 minutes ou 1 minute, et/ou
le nombre de premières périodes de temps (T1) du premier historique (H₁) ou recueil de données est 1, 2, 3, 4, 6, 24, 48, 144 ou 1440.

4. Procédé mis en œuvre par ordinateur selon l'une quelconque des revendications précédentes, dans lequel la deuxième période de temps (T2) s'étend sur 30 jours, 60 jours, 90 jours, 180 jours, un an ou deux ans.

5. Procédé mis en œuvre par ordinateur selon l'une quelconque des revendications précédentes, dans lequel l'algorithme de détermination de modèle de consommation utilisateur est en outre formé sur :
le jour de la semaine, en particulier de la première période de temps (T1) respective et/ou de l'historique ou du recueil de données respectif de données représentant la quantité de chaleur (∑Q) soutirée, et/ou
le jour de l'année et/ou la semaine de l'année et/ou le mois de l'année, en particulier de la première période de temps respective et/ou des données d'historique respectives ou du recueil de données respectif, et/ou
la condition météorologique, en particulier à la première période de temps (T1) respective et/ou de l'historique ou du recueil de données respectif de données représentant la quantité de chaleur (∑Q) soutirée, et/ou
la température extérieure, en particulier à la première période de temps (T1) respective et/ou de l'historique ou du recueil de données respectif de données représentant une quantité de chaleur (∑Q) soutirée, et/ou
la situation de vacances de l'utilisateur ou du ménage, en particulier à la première période de temps (T1) respective et/ou de l'historique ou du recueil de données respectif de données représentant la quantité de chaleur (∑Q) soutirée, et/ou
le prix de l'énergie, en particulier à la première période de temps (T1) respective et/ou de l'historique ou du recueil de données respectif de données représentant la quantité de chaleur (∑Q) soutirée, et/ou
la disponibilité d'énergie verte, en particulier à la première période de temps (T1) respective et/ou de l'historique ou du recueil de données respectif de données représentant la quantité de chaleur (∑Q) soutirée, et/ou
l'emplacement géographique, en particulier à la première période de temps (T1) respective et/ou de l'historique ou du recueil de données respectif de données représentant la quantité de chaleur (∑Q) soutirée, et/ou
les facteurs culturels, en particulier à la première période de temps (T1) respective et/ou de l'historique ou du recueil de données respectif de données représentant la quantité de chaleur (∑Q) soutirée.

6. Procédé mis en œuvre par ordinateur selon l'une quelconque des revendications précédentes, dans lequel l'algorithme de détermination de modèle de consommation utilisateur prend également en considération des métadonnées lors de la détermination du modèle de consommation utilisateur (UCP), où les métadonnées sont choisies dans le groupe comprenant : le nombre de résidents, l'âge du(des) résident(s), l'âge moyen des résidents, le sexe des résidents, l'emplacement géographique, les facteurs culturels, la consommation annuelle d'eau chaude.

7. Procédé mis en œuvre par ordinateur selon la revendication 6, dans lequel l'algorithme de détermination de modèle de consommation utilisateur comprend en outre :
l'attribution de l'utilisateur ou du ménage à un cluster ou groupe prédéterminé sur la base d'au moins une des métadonnées,
la détermination d'un sous-algorithme de détermination de modèle de consommation utilisateur sur la base du cluster ou groupe attribué,
dans lequel le sous-algorithme de détermination de modèle de consommation utilisateur a été de préférence formé sur les données d'une pluralité d'utilisateurs ou de ménages présentant la même au moins une des métadonnées.

8. Procédé mis en œuvre par ordinateur selon la revendication 7, dans lequel, après que le sous-algorithme de détermination de modèle de consommation utilisateur a été déterminé, un algorithme individuel de détermination de modèle de consommation utilisateur est développé en formant un sous-algorithme prédéfini de détermination de modèle de consommation utilisateur sur la base de premières données d'historique (H₁) acquises ou d'un ou plusieurs recueils de données et/ou de deuxièmes données d'historique (H₂) ou d'un ou plusieurs recueils de données représentant la quantité de chaleur (∑Q) soutirée par l'utilisateur ou le ménage sur une troisième période de temps (T3), dans lequel la troisième période de temps (T3) s'étend de préférence sur 1 jour, 2 jours, 10 jours, 30 jours, 60 jours, 90 jours, 180 jours, un an ou de manière continue.

9. Procédé mis en œuvre par ordinateur selon l'une quelconque des revendications précédentes, dans lequel l'algorithme de détermination de modèle de consommation utilisateur est formé pour déterminer des habitudes d'utilisateurs individuels incluant : prendre une douche le matin, prendre une douche le soir, prendre un bain le soir, utiliser une quantité de chaleur (∑Q) moyenne, en particulier une quantité d'énergie équivalente, pour prendre une douche ou un bain.

10. Procédé mis en œuvre par ordinateur selon l'une quelconque des revendications 1 à 9, dans lequel, en cas de détection d'un écart lors de la génération de la prévision de consommation d'eau chaude domestique, la prévision de consommation d'eau chaude domestique est automatiquement ajustée et/ou il est demandé à l'utilisateur de confirmer l'écart détecté, de préférence via un terminal de commande, et en fonction de la confirmation et/ou de l'entrée de l'utilisateur, la prévision de consommation d'eau chaude domestique est ajustée, dans lequel l'écart comprend au moins l'un parmi une situation de vacances de l'utilisateur ou du ménage, une condition météorologique, ou des événements inattendus tels qu'une douche prise plus tôt que la moyenne, un ou plusieurs invités, ou une fête.

11. Procédé mis en œuvre par ordinateur selon l'une quelconque des revendications 1 à 10, dans lequel la prévision de consommation d'eau chaude domestique est déterminée pour une quatrième période de temps (T4) de 10 minutes, 30 minutes, 1 heure, 2 heures, 4 heures, 6 heures ou 12 heures.

12. Procédé mis en œuvre par ordinateur selon l'une quelconque des revendications 1 à 11, dans lequel des événements comprenant des vacances de l'utilisateur ou du ménage, un ou plusieurs invités, une fête, etc. sont déterminés en accédant à des données en ligne telles qu'un calendrier et/ou par entrée de l'utilisateur, de préférence via un terminal de commande.

13. Procédé mis en œuvre par ordinateur selon l'une quelconque des revendications précédentes, dans lequel une quantité de chaleur sur une période de commande T_period à stocker dans le réservoir de stockage de chaleur (20) est déterminée sur la base de la prévision de consommation d'eau chaude domestique générée.

14. Procédé mis en œuvre par ordinateur selon la revendication 13, dans lequel la quantité de chaleur sur la période de commande T_period à stocker dans le réservoir de stockage de chaleur (20) est déterminée en appliquant un algorithme de commande de chaleur à la prévision de consommation d'eau chaude domestique générée, dans lequel l'algorithme de commande de chaleur est de préférence un algorithme formé.

15. Procédé mis en œuvre par ordinateur selon la revendication 14, dans lequel l'algorithme de commande de chaleur est formé sur : le prix de l'énergie électrique, la disponibilité d'énergie locale ou la disponibilité d'énergie verte, la condition météorologique, l'empreinte carbone de l'énergie, les prévisions météorologiques, etc.

16. Dispositif de commande (1) destiné à générer une prévision de consommation d'eau chaude domestique présentant une unité de commande (2) et un moyen adapté pour mettre en œuvre les étapes du procédé des revendications 1 à 15.

17. Dispositif de commande (1) destiné à commander la production et/ou la distribution d'eau chaude domestique, en particulier en commandant un système (100) destiné à produire et/ou à distribuer de l'eau chaude domestique, présentant une unité de commande (2) et un moyen adapté pour mettre en œuvre les étapes du procédé des revendications 1 à 15.

18. Système (100) destiné à produire et/ou à distribuer de l'eau chaude domestique, comprenant :
un dispositif de commande, en particulier le dispositif de commande (1) selon la revendication 16, et un moyen adapté pour mettre en œuvre les étapes du procédé de l'une quelconque des revendications 1 à 15.

19. Système (100) selon la revendication 18, comprenant en outre :
un réservoir de stockage de chaleur (20), en particulier un réservoir de stockage d'eau chaude (20), plus particulièrement un réservoir sous pression, et
un moyen adapté pour déterminer une quantité de chaleur, en particulier une quantité d'énergie équivalente, stockée dans le réservoir de stockage de chaleur (20) et/ou pour déterminer une quantité de chaleur, en particulier une quantité d'énergie équivalente, soutirée du réservoir de stockage de chaleur (20).

20. Programme informatique comprenant des instructions destinées à amener le système selon la revendication 18 ou la revendication 19 à mettre en œuvre les étapes du procédé des revendications 1 à 15, et/ou
à amener le dispositif de commande selon la revendication 16 à mettre en œuvre les étapes du procédé des revendications 1 à 15, et/ou
à amener le dispositif de commande selon la revendication 17 à mettre en œuvre les étapes du procédé des revendications 1 à 15.

21. Support lisible par ordinateur sur lequel est stocké le programme informatique selon la revendication 20.
